# EUROPEAN PATENT APPLICATION

(11) **EP 4 799 725 A1**
(43) Date of publication of application: **02.09.2026**
(21) Application number: 24881740.5
(22) Date of filing: 25.10.2024
(51) Int. Cl.: B01J 29/08, B01J 29/40, B01J 23/02, C10G 47/02, C10G 49/24

(54) **COMPOSITE STARTUP CATALYST, AND PREPARATION METHOD THEREFOR AND USE THEREOF**

(30) Priority: 27.10.2023 CN 202311410492; 31.10.2023 CN 202311425795; 17.10.2024 CN 202411453364; 17.10.2024 CN 202411450698
(71) Applicant: China Petroleum & Chemical Corporation, Beijing 100728 (CN); Sinopec Research Institute of Petroleum Processing Co., Ltd., Beijing 100083 (CN)
(72) Inventor: HAN, Lei, Beijing 100083 (CN); SONG, Haitao, Beijing 100083 (CN); WANG, Peng, Beijing 100083 (CN); ZHOU, Xiang, Beijing 100083 (CN); SHA, Yuchen, Beijing 100083 (CN); ZHAO, Liuzhou, Beijing 100083 (CN)
(74) Representative: Hoffmann Eitle
(86) International application number: PCT/CN2024/127328
(87) International publication number: WO 2025/087380

(57) **Abstract**

The present invention relates to a composite start-up catalyst, characterized in that, based on the dry basis weight of the composite start-up catalyst, the composite start-up catalyst comprises 15-95 wt% of Component A catalyst, which is selected from a deep catalytic cracking or catalytic cracking equilibrium catalyst and/or a deep catalytic cracking or catalytic cracking equilibrium catalyst after treatment, wherein the treatment includes demetallization treatment and/or particle diameter adjustment treatment, and 5-85 wt% of Component B catalyst, which is selected from one or more fresh deep catalytic cracking catalyst or catalytic cracking catalyst, and optionally Component C catalyst; said Component C catalyst contains 2-10 wt% of an oxide of a modifying metal. The present invention also relates to a method for preparing the above composite start-up catalyst, its use in the start-up of a deep catalytic cracking or catalytic cracking unit, and a start-up method for a deep catalytic cracking or catalytic cracking unit.

## Description

### Technical Field

The present invention belongs to the technical field of catalysts, and relates to a composite start-up catalyst, particularly a composite start-up catalyst for efficient start-up, as well as a preparation method and use thereof.

### Background Art

Light olefins represented by ethylene and propylene are important basic organic chemical raw materials, renowned as the cornerstone of the modern chemical industry. With the increasing demand for light olefins and the continuous expansion of their application fields, the development and research of efficient production methods are becoming increasingly important. Deep catalytic cracking is currently one of the most promising technologies for the production of light olefins in terms of development and application prospects. This technology allows for flexible adjustment of product distribution and can reduce the reaction temperature and energy consumption compared to deep thermal cracking.

A start-up catalyst is a catalyst used during the start-up of a new unit or an existing unit after shutdown, for example, after a shutdown for maintenance. To achieve a smooth start-up of a deep catalytic cracking unit, the activity of the current start-up catalyst needs to be close to the expected activity value of the equilibrium catalyst of the target unit; its physical property indices and catalytic performance need to match the target unit to ensure stable and safe start-up of the unit, and to stabilize the product distribution quickly to a state close to the target product distribution, ensuring economic benefits. In new deep catalytic cracking units, due to differences in processes, units, feedstocks and processing schemes, etc., the application of different equilibrium catalysts can prolong the time for the unit to reach the design conditions.

When starting up a new deep catalytic cracking unit or a catalytic cracking unit, or starting up such units after a shutdown for maintenance, it is necessary to use a start-up catalyst. Traditional start-up catalysts for new units commonly adopt an equilibrium catalyst solution, which has many limitations: first, the physicochemical properties of equilibrium catalysts from different units are significantly different due to differences in feedstock properties, actual operating conditions, etc., making them often difficult to use directly; for example, using an FCC equilibrium catalyst in a DCC unit can cause key technical indicators such as light olefin yields to fail to reach design values for a long time; second, the market resources for deep catalytic cracking equilibrium catalysts are scarce, and their quality is uneven; third, the requirements for start-up catalysts vary under different process conditions, making efficient matching difficult and seriously affecting the stable operation and economic benefits of the unit. During normal production, when the equilibrium catalyst is poisoned and needs rapid replacement, or when abnormal catalyst loss occurs in the unit and catalyst needs to be supplemented.

Technologies for deep catalytic cracking of heavy oil or high-density heavy oil to produce light olefins, such as the RTC process technology, effectively utilize inferior heavy oil to produce propylene and ethylene. However, the prior art does not have a start-up catalyst specifically designed for the deep catalytic cracking of heavy oil or high-density heavy oil.

Catalytic cracking is an important method for producing gasoline. Besides producing gasoline, it also produces liquefied petroleum gas (LPG), wherein the propylene in LPG is an important chemical raw material. In order to both increase propylene production and increase gasoline production, refiners have developed technologies for producing clean gasoline, such as the MIP technology ("A New Catalytic Cracking Process MIP for Producing Clean Gasoline Components", Xu Youhao et al., Petroleum Processing and Petrochemicals, Vol. 32, No. 8, pp. 1-5), and have developed MIP series technologies based on it, such as the MIP-CGP catalytic cracking process technology (A MIP Process for Clean Gasoline and Propylene, which is a catalytic cracking process developed by SINOPEC Research Institute of Petroleum Processing Co., Ltd. based on the technology for catalytic cracking technology for producing more iso-paraffins (MIP) to produce gasoline meeting Euro III emission standards and increase propylene production), MIP-LTG technology, MIP-DCR ("Development and Commercial Application of MIP-DCR Process Technology", Gong Jianhong et al., Petroleum Processing and Petrochemicals, Vol. 44, No. 3, March 2013, pp. 9-14). Currently, there are over 70 MIP-CGP units in China, and several FCC units will be revamped to MIP units in the future. The start-up of new units often cannot use the catalytic cracking catalyst used during normal unit operation, as its activity is too high, which can easily cause significant operational fluctuations and often lead to start-up failure. For this reason, the start-up of existing catalytic cracking units usually uses the equilibrium catalyst from normal production. However, using an equilibrium catalyst for start-up often suffers from an insufficient quantity of equilibrium catalyst. Furthermore, new units do not have their own equilibrium catalyst available for use, and using equilibrium catalysts from other units, due to poor matching with the unit, leads to longer start-up times. Therefore, new units require a start-up catalyst with a high degree of matching in physicochemical properties to ensure stable and efficient unit start-up. Additionally, during the daily operation of the unit, if the feedstock nature suddenly becomes heavier, causing catalyst poisoning, or if abnormal catalyst loss occurs in the unit, excellent start-up catalyst resources are needed for rapid replacement or replenishment to ensure the stable operation of the unit.

Through research, the inventors of the present invention have found that during the start-up process of existing deep catalytic cracking units or catalytic cracking units, even when using deep catalytic cracking or catalytic cracking equilibrium catalysts from similar units, it still takes a long time to reach the design conditions. However, replacing with fresh catalyst cannot be done too quickly, otherwise, large fluctuations are prone to occur during the replacement process, and the stabilization time is often long, typically taking more than three months to reach stability. Surprisingly, however, when using a composite start-up catalyst having appropriately low deep cracking or cracking activity, a lower coke factor, and a higher propylene index (or higher gasoline index), it is possible to efficiently and smoothly achieve the replacement of the deep cracking or cracking catalyst designed for the catalytic cracking or deep catalytic cracking unit and reach the reaction targets of the designed catalyst.

### Summary of the Invention

A first object of the present invention is to provide a composite start-up catalyst used as a start-up catalyst for the start-up phase (including start-up after shutdown for maintenance, start-up of a new unit) of a deep catalytic cracking unit for heavy oil or high-density heavy oil, which can achieve efficient and stable start-up of deep catalytic cracking unit of heavy oil or high-density heavy oil, such as an RTC unit.

A second object of the present invention is to provide a start-up catalyst for the start-up of a catalytic cracking unit, particularly suitable for the start-up of a unit designed to maximize gasoline and propylene production. This start-up catalyst can achieve efficient and stable start-up of a catalytic cracking unit co-producing propylene and gasoline, such as an MIP catalytic cracking unit, during its start-up phase (including shutdown for maintenance, rapid replacement after equilibrium catalyst poisoning, or catalyst replenishment during abnormal unit catalyst loss).

A third object of the present invention is to provide a method for preparing the above-mentioned composite start-up catalyst.

A fourth object of the present invention is to provide a start-up method for deep catalytic cracking unit (e.g., an RTC process unit) of a heavy oil or high-density heavy oil (e.g., intermediate base heavy oil), wherein the method uses the deep catalytic cracking start-up catalyst according to the present invention.

A fifth object of the present invention is to provide a start-up method for a catalytic cracking unit designed to maximize gasoline and propylene production, wherein the method uses the catalytic cracking start-up catalyst according to the present invention.

To achieve the above objects, according to a first aspect of the present invention, the present invention provides a composite start-up catalyst, particularly a start-up catalyst for a deep catalytic cracking unit or a catalytic cracking unit, which is characterized in that, based on the dry basis weight of the composite start-up catalyst, the composite start-up catalyst comprises 15-95 wt% of Component A catalyst, which is selected from an equilibrium catalyst, and 5-85 wt% of Component B catalyst, which is selected from one or more fresh catalysts, preferably a fresh deep catalytic cracking catalyst or a fresh catalytic cracking catalyst, and optionally Component C catalyst; wherein the equilibrium catalyst is preferably a deep catalytic cracking equilibrium catalyst or catalytic cracking equilibrium catalyst and/or a deep catalytic cracking equilibrium catalyst or catalytic cracking equilibrium catalyst after treatment, the treatment may include demetallization treatment and/or particle diameter adjustment treatment, preferably, the equilibrium catalyst has a deep cracking activity of 55-65; the Component C catalyst contains 2-10 wt% of an oxide of a modifying metal.

More particularly, the above first aspect of the present invention relates to the following two types of composite start-up catalysts: a first type of composite start-up catalyst, which is a start-up catalyst for a deep catalytic cracking unit, which is characterized in that, based on the dry basis weight of the composite start-up catalyst, the composite start-up catalyst comprises 15-95 wt% of a deep catalytic cracking equilibrium catalyst and/or a deep catalytic cracking equilibrium catalyst after treatment, wherein the treatment may include demetallization treatment and/or particle diameter adjustment treatment, 5-85 wt% of one or more fresh deep catalytic cracking catalysts, and optionally Component C catalyst, wherein the optional Component C catalyst contains 2-10 wt% of an oxide of a modifying metal, preferably, the modifying metal is an alkaline earth metal; preferably, the deep catalytic cracking equilibrium catalyst has a deep cracking activity of 55-65; and,
a second type of composite start-up catalyst, which is a start-up catalyst for a catalytic cracking unit, which is characterized in that, based on the dry basis weight of the composite start-up catalyst, the composite start-up catalyst comprises 15-95 wt% of a catalytic cracking equilibrium catalyst and/or a catalytic cracking equilibrium catalyst after treatment, wherein the treatment may include demetallization treatment and/or particle diameter adjustment treatment, 5-85 wt% of one or more fresh catalytic cracking catalysts, and optionally Component C catalyst; wherein the optional Component C catalyst contains 2-10 wt% of an oxide of a modifying metal, preferably, the modifying metal is an alkaline earth metal; preferably, the catalytic cracking equilibrium catalyst has a cracking activity of 55-65.

According to a first series of the composite start-up catalyst of the above first aspect, particularly the start-up catalyst for a deep catalytic cracking unit, wherein based on the dry basis weight of the composite start-up catalyst, the composite start-up catalyst comprises:
(1) 15-95 wt%, preferably 70-95 wt% of Component A catalyst, and
(2) 5-85 wt%, preferably 5-30 wt% of Component B catalyst,

wherein, Component A catalyst is an equilibrium catalyst, preferably a deep catalytic cracking equilibrium catalyst and/or a deep catalytic cracking equilibrium catalyst after treatment, the treatment may include demetallization treatment and/or particle diameter adjustment treatment;
Component B catalyst is a fresh catalyst, the active component of which comprises a hollow hierarchical-porous ZSM-5 nanocrystal material, based on dry basis, the content of the hollow hierarchical-porous ZSM-5 nanocrystal material is 5-15 wt% relative to the total weight of Component B catalyst.

According to a second series of the composite start-up catalyst of the above first aspect, particularly for a start-up catalyst for a deep catalytic cracking unit, wherein based on the dry basis weight of the composite start-up catalyst, the composite start-up catalyst comprises:
(1) 20-90 wt%, preferably 75-85 wt% of Component A catalyst,
(2) 5-65 wt%, preferably 10-20 wt% of Component B catalyst,
(3) 5-15 wt%, preferably 5-10 wt% of Component C catalyst,

wherein, Component A catalyst is an equilibrium catalyst, preferably a deep catalytic cracking equilibrium catalyst and/or a deep catalytic cracking equilibrium catalyst after treatment, the treatment may include demetallization treatment and/or particle diameter adjustment treatment;
Component B catalyst is selected from fresh catalysts, the active component of which comprises a ZSM-5 zeolite, preferably, based on dry basis, the content of the ZSM-5 zeolite is 5-15 wt% relative to the total weight of Component B catalyst;
Component C catalyst contains 2-10 wt% of an oxide of a modifying metal, said modifying metal being an alkaline earth metal.

A third series of composite start-up catalyst according to the above first aspect, particularly a start-up catalyst for a catalytic cracking unit, is characterized in that, based on the dry basis weight of the composite start-up catalyst, the composite start-up catalyst comprises:
(1) 15-95%, preferably 75-95% of Component A catalyst,
(2) 5-85%, preferably 5-25% of Component B catalyst,

wherein, said Component A catalyst is an equilibrium catalyst, preferably a catalytic cracking equilibrium catalyst and/or a catalytic cracking equilibrium catalyst after treatment, said treatment may include demetallization treatment and/or particle diameter adjustment treatment;
Said Component B catalyst is selected from fresh catalysts, the active component of which comprises a modified small crystal grain Y-type zeolite material, based on dry basis, the content of the modified small crystal grain Y-type zeolite material is 5-15 wt% of Component B catalyst. Preferably, said Component A catalyst has a cracking activity of 55-65.

A fourth series of composite start-up catalyst according to the above first aspect, particularly a start-up catalyst for a catalytic cracking unit, is characterized in that, based on the dry basis weight of the composite start-up catalyst, the composite start-up catalyst comprises:
(1) 20-90%, preferably 75-90% of Component A catalyst,
(2) 5-65%, preferably 5-15% of Component B catalyst,
(3) 5-15%, preferably 5-10% of Component C catalyst,
wherein, Component A catalyst is an equilibrium catalyst, preferably a catalytic cracking equilibrium catalyst and/or a catalytic cracking equilibrium catalyst after treatment, main active component of Component B catalyst comprises a modified small crystal grain Y-type zeolite and optionally a ZSM-5 zeolite material, Component C catalyst comprises a support and a metal oxide, wherein Component C catalyst contains 2-10 wt% of an oxide of a modifying metal, preferably, said modifying metal is an alkaline earth metal.

According to a second aspect of the present invention, the present invention provides a method for preparing the above composite start-up catalyst, the method comprising: preparing Component B catalyst and optional Component C catalyst, and physically mixing Component A catalyst, Component B catalyst, and optional Component C catalyst.

According to a third aspect of the present invention, the present invention also relates to the use of the composite start-up catalyst in the start-up of a new deep catalytic cracking unit or new catalytic cracking unit a revamped deep catalytic cracking unit or catalytic cracking unit.

According to a fourth aspect of the present invention, the present invention also provides a start-up method for a deep catalytic cracking unit of heavy oil or high-density heavy oil, wherein during the start-up phase of the deep catalytic cracking unit, the heavy oil or high-density heavy oil is introduced into a deep catalytic cracking reactor to contact a fluidized deep catalytic cracking start-up catalyst according to the present invention to carry out a deep catalytic cracking reaction.

In the present invention, the heavy oil refers to heavy oil having a density of 0.87-0.90 g/ml at 20°C, and the high-density heavy oil (or heavier heavy oil) refers to heavy oil having a density greater than 0.90 g/ml at 20°C, for example, heavy oil having a density of 0.91-0.95 g/ml at 20°C, e.g., the high-density heavy oil is an intermediate base heavy oil, said intermediate base heavy oil being a heavy oil having a paraffin content of 15-25 wt% and a total naphthene content of 25-35 wt%.

The method also comprises: separating the oil and gas products from the deep cracking reaction from the catalyst, stripping the catalyst, introducing it into a regenerator for regeneration, and then recycling it to the deep catalytic cracking reactor for reaction, introducing the oil and gas products into a subsequent oil and gas separation unit for separation, wherein the catalyst is the composite start-up catalyst provided by the present invention.

According to a fifth aspect of the present invention, the present invention also provides a start-up method for a catalytic cracking unit designed to maximize gasoline and propylene production, wherein during the start-up phase of the catalytic cracking unit, a feedstock oil is introduced into the catalytic cracking unit to contact a fluidized catalytic cracking start-up catalyst according to the present invention to carry out a catalytic cracking reaction.

The composite start-up catalyst provided by the present invention, when used in the start-up phase (including start-up after shutdown for maintenance or start-up of a new unit) of a deep catalytic cracking unit or catalytic cracking unit, can achieve efficient and stable start-up of the unit. For example, using the start-up catalyst to performing start-up allows the reaction indicators of the deep catalytic cracking unit or catalytic cracking unit, such as product distribution, to quickly reach expected values, significantly shortening the start-up time.

The composite start-up catalyst provided by the present invention has an appropriate deep catalytic cracking activity or catalytic cracking activity and an appropriate deep catalytic cracking product distribution or catalytic cracking product distribution, and can simultaneously meet the requirements of fluidization performance for particle diameter distribution, apparent bulk density, and attrition resistance; it can be used as a start-up catalyst for a fluidized deep catalytic cracking unit of high-density heavy oil, achieving smooth and efficient start-up of the deep catalytic cracking unit or catalytic cracking unit. For example, industrial application shows that when used for start-up of RTC unit, the start-up time can be significantly shorter, and the expected product distribution can be achieved within one week.

The method for preparing the composite start-up catalyst provided by the present invention, by compounding a deep catalytic cracking or catalytic cracking equilibrium catalyst with a specific fresh Component B catalyst, can obtain a composite start-up catalyst having the above properties. Furthermore, since it is prepared using an equilibrium catalyst, the cost of the catalyst is lower.

The method for preparing the composite start-up catalyst provided by the present invention, by using an equilibrium catalyst and compounding it with appropriate other catalyst components, can obtain a catalyst having appropriate activity and product distribution. This composite start-up catalyst can have a higher propylene factor while having a lower coke factor. Compared with using a fresh catalyst, using an equilibrium catalyst can also reduce the preparation cost of the catalyst.

In the start-up method for a deep catalytic cracking or catalytic cracking unit provided by the present invention, by using the composite start-up catalyst of the present invention before adding the deep catalytic cracking catalyst or catalytic cracking catalyst normally used in the unit operation, it is possible to avoid the disadvantages of high conversion load and high coke yield, and difficulty in stabilization caused by the high activity and high coke factor of existing start-up catalysts. With lower activity combined with a lower coke factor, and further combined with a higher propylene factor or gasoline factor during the start-up process of the deep catalytic cracking or catalytic cracking unit, the unit can be quickly stabilized before adding the catalyst normally used in production. Since the composite start-up catalyst has good fluctuation tolerance, after replacing a larger amount of fresh catalyst, the unit can achieve a new steady state faster than with existing start-up catalysts at a higher replacement amount, thereby making the start-up efficient and smooth. The start-up method provided by the present invention can significantly shorten the start-up time, for example, quickly achieving the expected product distribution, and can complete start-up within about one week.

In particular, the start-up method of deep catalytic cracking or catalytic cracking unit of high-density heavy oil provided by the present invention can achieve efficient and stable start-up of the unit, and can even complete unit start-up within one week to achieve stable operation. For example, when used in the start-up phase of an deep catalytic cracking unit for heavy oil in RTC process, such as the start-up of a new deep catalytic cracking unit of heavy oil or a deep catalytic cracking unit of heavy oil after revamping or maintenance, efficient and stable start-up of the unit can be achieved.

Other features and advantages of the present invention will be described in detail in the following detailed description of the invention.

### Description of the Figures

The following figures are used to further illustrate the technical solutions of the present invention and constitute a part of the specification. Together with the following specific embodiments, they serve to explain the present invention but do not constitute a limitation of the present invention. Wherein:
FIG. 1 shows a TEM image of the hollow hierarchical-porous ZSM-5 nanocrystal material 1 according to the present invention;
FIG. 2 shows an SEM image of the modified small crystal grain Y-type zeolite material 1 according to the present invention.

### Detailed Description of the Invention

The following specific embodiments are used to explain the technical solutions of the present invention in detail. It should be understood that the specific embodiments described in this specification are only used to illustrate the technical solutions of the present invention and are not intended to limit the scope of the present invention.

Any specific numerical value (including the endpoints of numerical ranges) disclosed in the specification of the present invention is not limited to the exact value, but should be understood to also encompass values close to that exact value, for example, all possible values within the range of the exact value ±5%. Moreover, for the disclosed numerical ranges, any combination between the endpoints of the range, between the endpoints and specific point values within the range, and between the specific point values can form one or more new numerical ranges, and these new numerical ranges should also be considered as specifically disclosed herein.

Unless otherwise indicated, terms used in the specification of the present invention have the same meanings as commonly understood by those skilled in the art. If a term is defined herein and the definition differs from the common understanding in the art, the definition herein shall prevail.

In the specification of the present invention, except for clearly stated content, any matter or item not mentioned directly applies those known in the art without any change. Moreover, any embodiment described herein can be freely combined with one or more other embodiments described herein, and the resulting technical solutions or ideas are considered as originally disclosed or recorded in the present invention and should not be considered as new content not previously disclosed or anticipated herein, unless such combination is considered by those skilled in the art to be obviously unreasonable.

All patent and non-patent documents mentioned in the specification of the present invention, including but not limited to textbooks and journal articles, are hereby incorporated by reference in their entirety.

In the specification of the present invention, the terms "comprise" and "include" are synonymous with "contain" and are inclusive or open-ended, and not exclude other elements not stated. It should be understood that the term "comprises" includes the exclusive and closed terms "consists of". In the specification of the present invention, the term "support" has the same meaning as "matrix support" and they are used interchangeably herein.

The measurement of performance parameters disclosed in the specification of the present invention, if not explicitly specified, is carried out by the most conventional methods in the art.

According to a first aspect of the present invention, the present invention provides a composite start-up catalyst, particularly a start-up catalyst for a deep catalytic cracking unit or a catalytic cracking unit, which is characterized in that, based on the dry basis weight of the composite start-up catalyst, the composite start-up catalyst comprises 15-95 wt% of Component A catalyst, which is selected from an equilibrium catalyst, and 5-85 wt% of Component B catalyst, which is selected from one or more fresh catalysts, preferably a fresh deep catalytic cracking catalyst or catalytic cracking catalyst, and optionally Component C catalyst; wherein the equilibrium catalyst is preferably a deep catalytic cracking or catalytic cracking equilibrium catalyst and/or a deep catalytic cracking or catalytic cracking equilibrium catalyst after treatment, the treatment may include demetallization treatment and/or particle diameter adjustment treatment, preferably, the equilibrium catalyst has a deep cracking activity of 55-65; the Component C catalyst contains 2-10 wt% of an oxide of a modifying metal.

A first series of the composite start-up catalyst of according to the above first aspect, particularly for a start-up catalyst for a deep catalytic cracking unit, based on the dry basis weight of the composite start-up catalyst, comprises:
15-95 wt%, preferably 70-95 wt% of Component A catalyst, and
5-85 wt%, preferably 5-30 wt% of Component B catalyst,
wherein, Component A catalyst is an equilibrium catalyst, preferably a deep catalytic cracking equilibrium catalyst and/or a deep catalytic cracking equilibrium catalyst after treatment, the treatment may include demetallization treatment and/or particle diameter adjustment treatment;
Component B catalyst is selected from fresh catalysts, the active component of which comprises a hollow hierarchical-porous ZSM-5 nanocrystal material, based on dry basis, the content of the hollow hierarchical-porous ZSM-5 nanocrystal material is 5-15 wt% relative to the total weight of Component B catalyst.

The preparation method of the first series of composite start-up catalyst according to the above first aspect is simple, the first series of composite start-up catalyst is obtained by physically blending Component A catalyst, Component B catalyst, and optionally other components uniformly.

According to one embodiment of the first series of composite start-up catalyst, the Component A catalyst has a deep cracking activity of 55-65. Said Component A catalyst has a specific surface area ≥100 m²/g, for example 100-150 m²/g. Said Component A catalyst has a nickel content ≤6000 µg/g, for example 200-5800 µg/g, a vanadium content ≤3000 µg/g, for example 300-2800 µg/g, and a rare earth element content ≤10000 µg/g, for example 1000-9500 µg/g.

According to one embodiment of the first series of composite start-up catalyst of the above first aspect, in said composite start-up catalyst, Component A catalyst has the following particle diameter distribution: content of particles with a particle diameter of 0-20 µm (referring to particle diameter greater than 0 and less than or equal to 20 micrometers) ≤ 3.0 vol%, content of particles with a particle diameter of 0-40 µm (referring to particle diameter greater than 0 and less than or equal to 40 micrometers) ≤ 18.0 vol%, content of particles with a particle diameter of 0-149 µm (referring to the volume content of particles with a particle diameter greater than 0 and less than or equal to 149 micrometers) ≥ 90.0 vol%, and the average particle diameter (or average particle diameter) calculated by volume is 60.0-80.0 µm. Wherein, the particle diameter distribution is measured by laser scattering method (NB/SH/T 0951-2017, Determination of Particle diameter Distribution of Catalytic Cracking Catalysts).

According to one embodiment of the first series of composite start-up catalyst of the above first aspect, in said composite start-up catalyst, Component A catalyst has a deep cracking activity of 55-65, for example 56, 58, 60, 62 or 64. The measurement method of the deep cracking activity refers to NB/SH/T 0952-2017 (measurement method for microreactivity index of catalytic cracking catalysts). The reaction temperature for measuring the deep cracking activity of the present invention is 520°C.

According to one embodiment of the first series of composite start-up catalyst of the above first aspect, in said composite start-up catalyst, Component B catalyst has an apparent bulk density of 0.80-0.94 g/mL. The measurement method of apparent bulk density refers to NB/SH/T 0954-2017 (Determination Method of Apparent Bulk Density of Catalytic Cracking Catalysts).

According to one embodiment of the first series of composite start-up catalyst of the above first aspect, the composite start-up catalyst has an abrasion index of ≤ 2.0, and the abrasion index is measured by the straight tube method according to the standard NB/SH/T 0964-2017 (Determination of Attrition Index of Catalytic Cracking Catalysts).

According to one embodiment of the first series of composite start-up catalyst of the above first aspect, in said composite start-up catalyst, Component B catalyst has a content of particles with a particle diameter of 0-20 µm ≤ 2.0 vol%, a content of particles with a particle diameter of 0-40 µm ≤ 18.0 vol%, a content of particles with a particle diameter of 0-149 µm ≥ 90.0 vol%, and/or, Component B catalyst has an average particle diameter of 60.0-85.0 µm.

According to one embodiment of the first series of composite start-up catalyst of the above first aspect, in said composite start-up catalyst, the active component of Component B catalyst is a hollow hierarchical-porous ZSM-5 nanocrystal material, the content of the hollow hierarchical-porous ZSM-5 nanocrystal material is 5-15 wt% of Component B catalyst.

According to one embodiment of the first series of composite start-up catalyst of the above first aspect, the hollow hierarchical-porous ZSM-5 nanocrystal material has a hollow structure, an average crystal grain size of 0.2-3.0 µm, a ratio of bulk silicon-aluminum molar ratio to surface silicon-aluminum molar ratio of 1.0-1.5, a total specific surface area of 340-420 m²/g, a mesopore specific surface area of 40-150 m²/g, and/or, the N₂ adsorption-desorption curve exhibits an H4-type hysteresis loop.

According to one embodiment of the first series of composite start-up catalyst of the above first aspect, the hollow hierarchical-porous ZSM-5 nanocrystal material has a relative crystallinity of 75-95%.

The hollow hierarchical-porous ZSM-5 nanocrystal material can be commercially available or prepared according to existing methods. For example, the hollow hierarchical-porous ZSM-5 nanocrystal material can be prepared according to the method disclosed in Chinese application CN116177561A, such as the method disclosed in claims 6-10 or Examples 1-4 thereof.

According to one embodiment of the first series of composite start-up catalyst of the above first aspect, the Component B catalyst further comprises a support (also called matrix support), wherein the support is selected from natural clay, alumina support, and silica support.

According to one embodiment of the first series of composite start-up catalyst of the above first aspect, the alumina support is one or more of alumina sol, acidified pseudo-boehmite, hydrated alumina, and activated alumina; the silica support is one or more of neutral silica sol, acidic silica sol, or alkaline silica sol.

According to one embodiment of the first series of composite start-up catalyst of the above first aspect, based on dry basis weight, Component B catalyst contains 10-15 wt% of active component, 70-80 wt% of kaolin, 3-8 wt% of pseudo-boehmite, 5-10 wt% of alumina sol, and 0-5 wt% of silica sol.

According to one embodiment of the first series of composite start-up catalyst of the above first aspect, the composite start-up catalyst has an apparent bulk density of 0.90-0.94 g/mL and an abrasion index of ≤ 2.0.

According to one embodiment of the first series of composite start-up catalyst of the above first aspect, the composite start-up catalyst has a nickel content ≤4000 µg/g, for example 150-3800 µg/g, a vanadium content ≤2500 µg/g, for example 200-2300 µg/g, a content of particles with a particle diameter of 0-20 µm ≤ 2.0 vol%, a content of particles with a particle diameter of 0-40 µm ≤ 18.0 vol%, a content of particles with a particle diameter of 0-149 µm ≥ 90.0 vol%, and an average particle diameter calculated by volume of 65.0-85.0 µm.

According to one embodiment of the first series of composite start-up catalyst of the above first aspect, the composite start-up catalyst has a deep cracking activity of 58-62.

According to one embodiment of the first series of composite start-up catalyst of the above first aspect, the composite start-up catalyst has a coke factor ≤ 0.070, for example 0.40-0.50.

According to one embodiment of the first series of composite start-up catalyst of the above first aspect, the composite start-up catalyst has a propylene factor ≥ 0.44, for example 0.46-0.50.

According to a second series of the composite start-up catalyst of the above first aspect, particularly a start-up catalyst for a deep catalytic cracking unit, wherein based on the dry basis weight of the composite start-up catalyst, the composite start-up catalyst comprises:
(1) 20-90 wt%, preferably 75-85 wt% of Component A catalyst,
(2) 5-65 wt%, preferably 10-20 wt% of Component B catalyst,
(3) 5-15 wt%, preferably 5-10 wt% of Component C catalyst,
wherein, said Component A catalyst is an equilibrium catalyst, preferably a deep catalytic cracking equilibrium catalyst and/or a deep catalytic cracking equilibrium catalyst after treatment, said treatment may include demetallization treatment and/or particle diameter adjustment treatment, preferably, said Component A catalyst has a deep cracking activity of 55-65, preferably 57-64; said Component B catalyst is selected from fresh catalysts, the active component of which comprises a ZSM-5 zeolite, based on dry basis, the content of the ZSM-5 zeolite is 5-15 wt% relative to the total weight of Component B catalyst; said Component C catalyst contains 2-10 wt% of an oxide of a modifying metal, said modifying metal being an alkaline earth metal.

The preparation method of the second series of composite start-up catalyst according to the above first aspect is simple, the composite start-up catalyst is obtained by physically blending Component A catalyst, Component B catalyst, Component C catalyst, and optionally other components uniformly.

In the second series of composite start-up catalyst according to the above first aspect, Component A catalyst has the following particle diameter distribution: content of particles with a particle diameter (referred to as diameter or particle size) of 0-20 µm ≤ 3.0 vol%, content of particles with a particle diameter of 0-40 µm ≤ 18.0 vol%, content of particles with a particle diameter of 0-149 µm ≥ 90.0 vol%, and average particle diameter of 60.0-80.0 µm. Wherein, 0-20 µm refers to a particle diameter greater than 0 and not exceeding 20 micrometers, 0-40 µm refers to a particle diameter greater than 0 and not exceeding 40 micrometers, and 0-149 µm refers to a particle diameter greater than 0 and not exceeding 149 micrometers.

In the second series of composite start-up catalyst according to the above first aspect, Component A catalyst has preferably a deep cracking activity of 57-63, such as 58, 60 or 62. The measurement method of deep cracking activity refers to NB/SH/T 0952-2017 (Measurement method for microreactivity index of deep catalytic cracking catalysts or catalytic cracking catalysts). The reaction temperature for measuring the deep cracking activity of the present invention is 520°C.

In the second series of composite start-up catalyst according to the above first aspect, Component A catalyst is an equilibrium catalyst, which may be a deep catalytic cracking equilibrium catalyst or a treated deep catalytic cracking equilibrium catalyst obtained by treatment, said treatment may include demetallization treatment and/or particle diameter adjustment treatment. Said demetallization treatment may employ one or more of chemical demetallization treatment and physical demetallization treatment. Said chemical demetallization treatment is, for example, ammonia method, acid method demetallization treatment, the acid method is, for example, using citric acid solution or sulfuric acid solution for demetallization treatment. Said physical demetallization treatment is, for example, magnetic separation. Said particle diameter adjustment treatment is, for example, purging with gas to remove fine powder, or sieving. Said equilibrium catalyst is an equilibrium catalyst produced by a deep catalytic cracking unit, for example, an equilibrium catalyst produced by a DCC unit.

According to one embodiment of the second series of composite start-up catalyst of the above first aspect, Component A catalyst has a specific surface area ≥100 m²/g; nickel content ≤6000 µg/g, vanadium content ≤3000 µg/g, rare earth element content ≤10000 µg/g. For example, said Component A catalyst has a specific surface area of 100-200 m²/g or 100-150 m²/g; nickel content of 500-6000 µg/g or 800-5800 µg/g or 1000-3000 µg/g, vanadium content of 50-3000 µg/g or 500-1000 µg/g or 300-2800 µg/g, rare earth element content of 500-10000 µg/g or 1000-9500 µg/g or 3000-6000 µg/g.

According to one embodiment of the second series of composite start-up catalyst of the above first aspect, Component B catalyst has an apparent bulk density of 0.80-0.94 g/mL, preferably 0.85-0.90 g/mL, and an abrasion index of ≤ 2.0.

According to one embodiment of the second series of composite start-up catalyst of the above first aspect, the preparation method of Component B catalyst comprises: pulping a matrix support, a slurry of ZSM-5 zeolite, and optionally water, spray drying to obtain first catalyst particles, and optionally calcining.

According to one embodiment of the second series of composite start-up catalyst of the above first aspect, in said Component B catalyst, the content of particles with a particle diameter of 0-20 µm is ≤ 2.0 vol%, the content of particles with a particle diameter of 0-40 µm is ≤ 18.0 vol%, the content of particles with a particle diameter of 0-149 µm is ≥ 90.0 vol%, and the average particle diameter is 60.0-85.0 µm.

According to one embodiment of the second series of composite start-up catalyst of the above first aspect, in the composite start-up catalyst, the active component of Component B catalyst is ZSM-5 zeolite, its content based on dry basis weight being 5-15 wt% of Component B catalyst. The ZSM-5 zeolite may be, for example, one or more of hydrogen-form ZSM-5 zeolite, transition metal-modified ZSM-5 zeolite, the transition metal being, for example, one or more of rare earth, iron, cobalt, nickel, and the ZSM-5 zeolite may further contain phosphorus. According to one embodiment, said ZSM-5 zeolite is a hierarchical-porous ZSM-5 zeolite, said hierarchical-porous ZSM-5 zeolite being, for example, one or more of hydrogen-form hierarchical-porous ZSM-5 zeolite, metal-modified hierarchical-porous ZSM-5 zeolite, or phosphorus-containing metal-modified hierarchical-porous ZSM-5 zeolite. The hierarchical-porous ZSM-5 zeolite can be commercially available or prepared according to existing methods. For example, the hierarchical-porous ZSM-5 zeolite can be a hollow hierarchical-porous ZSM-5 nanocrystal material, which can be prepared according to the method disclosed in Chinese patent application CN116177561A, for example, according to the method disclosed in claims 6-10 or Examples 1-4 of that patent application. ZSM-5 zeolite that does not contain mesopores or has a mesopore volume of less than 0.02 ml/g is non-hierarchical-porous ZSM-5 zeolite or conventional ZSM-5 zeolite, while those with a mesopore volume greater than 0.2 ml/g are hierarchical-porous ZSM-5 zeolite. Said ZSM-5 zeolite may be, for example, one or more of ZRP zeolite (phosphorus-containing non-hierarchical-porous ZSM-5 zeolite), ZSP zeolite (phosphorus- and transition metal-containing non-hierarchical ZSM-5 zeolite), MPZ zeolite (mesoporous ZSM-5 zeolite), and phosphorus- and transition metal-containing MPZ zeolite (referred to as RMPZ, mesoporous ZSM-5 zeolite).

According to one embodiment of the second series of composite start-up catalyst of the above first aspect, Component B catalyst further comprises a matrix support, based on dry basis, the content of the matrix support in Component B catalyst is 85-95 wt% of Component B catalyst, the matrix support being selected from one or more of natural clay, alumina support, and silica support; preferably, said alumina support is one or more of alumina sol, acidified pseudo-boehmite, hydrated alumina, and activated alumina; said silica support is one or more of neutral silica sol, acidic silica sol, or alkaline silica sol.

According to one embodiment of the second series of composite start-up catalyst of the above first aspect, based on dry basis weight, Component B catalyst contains 8-15 wt% of active component, 70-80 wt% of kaolin, 3-8 wt% of pseudo-boehmite, 3-10 wt% of alumina sol, and 2-10 wt% of silica sol.

According to one embodiment of the second series of composite start-up catalyst of the above first aspect, the content of the modifying metal oxide in Component C catalyst is 2-10%, for example 3-9%, such as 4%, 5%, 6%, 7% or 8%; the content of the support is 90-98 wt%, and the metal oxide is an alkaline earth metal oxide. The support or matrix support is selected from one or more of natural clay, alumina support, and silica support; said alumina support is, for example, one or more of alumina sol, acidified pseudo-boehmite, hydrated alumina, and activated alumina; said silica support is, for example, one or more of neutral silica sol, acidic silica sol, or alkaline silica sol.

According to one embodiment of the second series of composite start-up catalyst of the above first aspect, the preparation method of Component C catalyst comprises: mixing a matrix support with optional water to form a slurry, spray drying to obtain second catalyst particles, modifying the second catalyst particles with a modifying metal by impregnation, drying, and calcining; or the preparation method of Component C catalyst comprises: mixing a matrix support, a modifying metal salt solution, and optional water to form a slurry, spray drying to obtain third catalyst particles, and optionally calcining.

According to one embodiment of the second series of composite start-up catalyst of the above first aspect, based on dry basis weight, Component C catalyst contains 3-8 wt% of modifying metal oxide, 70-85 wt% of kaolin, 3-8 wt% of pseudo-boehmite, 3-8 wt% of alumina sol, and 2-10 wt% of silica sol.

According to one embodiment of the second series of composite start-up catalyst of the above first aspect, Component C catalyst can be obtained by modifying inert particles with the modifying metal element compound, or by adding the modifying metal element compound to an inert particle precursor, pulping, and then spray drying.

According to one embodiment of the second series of composite start-up catalyst of the above first aspect, in the preparation method of Component C catalyst, the modifying metal element compound is one or more of magnesium nitrate, barium nitrate, strontium nitrate, or radium nitrate.

According to one embodiment of the second series of composite start-up catalyst of the above first aspect, the composite start-up catalyst has an apparent bulk density of 0.90-0.94 g/mL.

According to one embodiment of the second series of composite start-up catalyst of the above first aspect, the composite start-up catalyst has an abrasion index ≤ 2.0.

According to one embodiment of the second series of composite start-up catalyst of the above first aspect, the composite start-up catalyst has: a nickel content ≤4000 µg/g, and/or, a vanadium content ≤2500 µg/g, for example, a nickel content of 200-4000 µg/g, and/or, a vanadium content of 300-2500 µg/g.

According to one embodiment of the second series of composite start-up catalyst of the above first aspect, in the composite start-up catalyst: the content of particles with a particle diameter of 0-20 µm is ≤ 2.0 vol%, the content of particles with a particle diameter of 0-40 µm is ≤ 18.0 vol%, the content of particles with a particle diameter of 0-149 µm is ≥ 90.0 vol%, and/or, the average particle diameter calculated by volume is 65.0-85.0 µm, preferably 70-80.0 µm.

According to one embodiment of the second series of composite start-up catalyst of the above first aspect, the composite start-up catalyst preferably has a deep cracking activity of 58-62.

According to one embodiment of the second series of composite start-up catalyst of the above first aspect, the composite start-up catalyst has a coke factor of ≤ 0.070, for example of 0.040-0.065.

According to one embodiment of the second series of composite start-up catalyst of the above first aspect, the composite start-up catalyst has a propylene factor of ≥ 0.44, for example 0.45-0.5.

A third series of the composite start-up catalyst according to the above first aspect, particularly a start-up catalyst for a catalytic cracking unit, is characterized in that, based on the dry basis weight of the composite start-up catalyst, the composite start-up catalyst comprises:
(1) 15-95%, preferably 75-95% of Component A catalyst,
(2) 5-85%, preferably 5-25% of Component B catalyst,

wherein, said Component A catalyst is an equilibrium catalyst, preferably a catalytic cracking equilibrium catalyst and/or a catalytic cracking equilibrium catalyst after treatment, said treatment may include demetallization treatment and/or particle diameter adjustment treatment;
said Component B catalyst is selected from fresh catalysts, the active component of which comprises a modified small crystal grain Y-type zeolite material, based on dry basis, the content of the modified small crystal grain Y-type zeolite material is 5-15 wt% of Component B catalyst. Preferably, said Component A catalyst has a cracking activity of 55-65.

According to one embodiment of the third series of composite start-up catalyst of the above first aspect, the start-up catalyst can be obtained by physically blending Component A catalyst and Component B catalyst uniformly.

According to one embodiment of the third series of composite start-up catalyst of the above first aspect, Component A catalyst has a specific surface area ≥100 m²/g, for example of 100-150 m²/g; nickel content ≤6000 µg/g, for example of 200-5800 µg/g, vanadium content ≤4000 µg/g, for example of 500-3500 µg/g, iron content ≤5000 µg/g, for example of 500-4500 µg/g, rare earth element content ≥10000 µg/g, for example of 10000-50000 µg/g.

According to one embodiment of the third series of composite start-up catalyst of the above first aspect, the particle diameter distribution of Component A catalyst is: content of particles with a particle diameter of 0-20 µm (referring to particle diameter greater than 0 and less than or equal to 20 micrometers) ≤ 3.0 vol%, content of particles with a particle diameter of 0-40 µm (referring to particle diameter greater than 0 and less than or equal to 40 micrometers) ≤ 18.0 vol%, content of particles with a particle diameter of 0-149 µm (referring to the volume content of particles with a particle diameter greater than 0 and less than or equal to 149 micrometers) ≥ 90.0 vol%, and average particle diameter (or average particle diameter) is 60.0-80.0 µm. The particle diameter distribution is measured by laser scattering method (NB/SH/T 0951-2017, Determination of Particle diameter Distribution of Catalytic Cracking Catalysts).

According to one embodiment of the third series of composite start-up catalyst of the above first aspect, in said start-up catalyst, Component A catalyst has a cracking activity of 55-65.

According to one embodiment of the third series of composite start-up catalyst of the above first aspect, said start-up catalyst has a coke factor ≤ 0.140; and/or, said start-up catalyst has a gasoline factor ≥ 0.420.

The measurement method of cracking activity refers to NB/SH/T 0952-2017, Measurement Method for Microreactivity Index of Catalytic Cracking Catalysts. The reaction temperature for the cracking activity of the present invention is 460°C.

The coke factor and gasoline factor can be calculated by reacting heavy oil with the cracking catalyst in an FFB fixed fluidized bed reactor at a temperature of 520°C, a catalyst-to-oil weight ratio of 10, and a weight hourly space velocity of 10 h⁻¹, wherein said coke factor = coke yield/conversion rate, and said gasoline factor = gasoline yield/conversion rate. The heavy oil preferably has a density at 20°C of 0.8730-0.9299 g/cc.

According to one embodiment of the third series of composite start-up catalyst of the above first aspect, Component B catalyst has an apparent bulk density of 0.80-0.94 g/mL. The measurement method of apparent bulk density refers to NB/SH/T 0954-2017, Measurement Method of Apparent Bulk Density of Catalytic Cracking Catalysts.

According to one embodiment of the third series of composite start-up catalyst of the above first aspect, the start-up catalyst has an abrasion index ≤ 2.0, and the abrasion index is measured according to the standard NB/SH/T 0964-2017, Determination of Attrition Index of Catalytic Cracking Catalysts, by the straight tube method.

According to one embodiment of the third series of composite start-up catalyst of the above first aspect, Component B catalyst has a content of particles with a particle diameter of 0-20 µm ≤ 2.0 vol%, a content of particles with a particle diameter of 0-40 µm ≤ 18.0 vol%, a content of particles with a particle diameter of 0-149 µm ≥ 90.0 vol%, and an average particle diameter of 60.0-85.0 µm.

According to one embodiment of the third series of composite start-up catalyst of the above first aspect, the active component of Component B catalyst is a modified small crystal grain Y-type zeolite material, the content of the modified small crystal grain Y-type zeolite material being 5-15 wt% of Component B catalyst.

According to one embodiment of the third series of composite start-up catalyst of the above first aspect, in said modified small crystal grain Y-type zeolite material: RE₂O₃ content is 0-18 wt%, Na₂O content does not exceed 1 wt%. Preferably, said modified small crystal grain Y-type zeolite material has an average crystal grain size of 0.5-1.0 µm, for example 0.5-0.9 µm or 0.5-0.8 µm. Preferably, said modified small crystal grain Y-type zeolite material has a unit cell constant preferably of 2.430-2.470 nm. In said modified small crystal grain Y-type zeolite material, the proportion of non-framework aluminum content to total aluminum content is preferably not higher than 30%. Preferably, said modified small crystal grain Y-type zeolite material has a ratio of B acid amount to L acid amount preferably not less than 2.5. Preferably, said modified small crystal grain Y-type zeolite material has an external surface acid amount preferably of 150-300 µmol/g. Preferably, said modified small crystal grain Y-type zeolite material has a total specific surface area of 580-650 m²·g⁻¹.

According to one embodiment of the third series of composite start-up catalyst of the above first aspect, said modified small crystal grain Y-type zeolite material has a relative crystallinity of 45-65%.

Preferably, said modified small crystal grain Y-type zeolite material has a lattice collapse temperature not lower than 1030°C.

The modified small crystal grain Y-type zeolite material can be commercially available or prepared according to existing methods. For example, the modified small crystal grain Y-type zeolite material can be prepared according to the small crystal grain preparation method disclosed in Chinese application 202011180404.5 (CN114433215B), for example the method disclosed in any one of claims 2-17 or Examples 1-3 of that application.

According to one embodiment of the third series of composite start-up catalyst of the above first aspect, Component B catalyst further comprises a support (also called matrix support), the support being selected from natural clay, alumina support, and silica support.

Preferably, said alumina support is one or more of alumina sol, acidified pseudo-boehmite, hydrated alumina, and activated alumina; said silica support is one or more of neutral silica sol, acidic silica sol, or alkaline silica sol.

According to one embodiment of the third series of composite start-up catalyst of the above first aspect, based on dry basis weight, Component B catalyst contains 10-15 wt% of active component, 70-80 wt% of kaolin, 3-8 wt% of pseudo-boehmite, 5-10 wt% of alumina sol, and 0-5 wt% of silica sol.

According to one embodiment of the third series of composite start-up catalyst of the above first aspect, said start-up catalyst has an apparent bulk density of 0.90-0.94 g/mL and an abrasion index ≤ 2.0.

According to one embodiment of the third series of composite start-up catalyst of the above first aspect, said start-up catalyst has a nickel content ≤5000 µg/g, a vanadium content ≤3500 µg/g, an iron content ≤4500 µg/g, and/or, a content of particles with a particle diameter of 0-20 µm ≤ 2.0 vol%, a content of particles with a particle diameter of 0-40 µm ≤ 18.0 vol%, a content of particles with a particle diameter of 0-149 µm ≥ 90.0 vol%, and an average particle diameter of 65.0-85.0 µm.

According to one embodiment of the third series of composite start-up catalyst of the above first aspect, said start-up catalyst has a cracking activity of 55-65, such as 60-65 or 62-65, and/or, a coke factor ≤ 0.140, for example 0.1-0.14, and a gasoline factor ≥ 0.420, for example 0.42-0.47 or 0.44-0.46.

A fourth series of composite start-up catalyst according to the above first aspect, particularly a start-up catalyst for a catalytic cracking unit, is characterized in that, based on the dry basis weight of the composite start-up catalyst, the composite start-up catalyst comprises:
(1) 20-90%, preferably 75-90% of Component A catalyst,
(2) 5-65%, preferably 5-15% of Component B catalyst,
(3) 5-15%, preferably 5-10% of Component C catalyst,
wherein, Component A catalyst is an equilibrium catalyst, preferably a catalytic cracking equilibrium catalyst and/or a catalytic cracking equilibrium catalyst after treatment, main active component of Component B catalyst comprises a modified small crystal grain Y-type zeolite and optionally a ZSM-5 zeolite material, Component C catalyst comprises a support and a metal oxide, wherein Component C catalyst contains 2-10 wt% of an oxide of a modifying metal, preferably, said modifying metal is an alkaline earth metal.

According to one embodiment of the fourth series of composite start-up catalyst of the above first aspect, the catalyst is prepared by physically blending Component A catalyst, Component B catalyst, and Component C catalyst uniformly in a certain proportion.

According to one embodiment of the fourth series of composite start-up catalyst of the above first aspect, in the catalyst, Component A catalyst has: specific surface area ≥100 m²/g, for example 100-150 m²/g; nickel content ≤6000 µg/g, for example 200-5500 µg/g, vanadium content ≤5000 µg/g, for example 500-3500 µg/g, iron content ≤5000 µg/g, for example 500-4700 µg/g, sodium content ≤3000 µg/g, for example 200-2000 µg/g, calcium content ≤3000 µg/g, for example 200-2000 µg/g, Y-type zeolite crystallinity ≥20.0%, for example 20-30%, ZSM-5 zeolite crystallinity ≥2.0%, for example 2-10%. The crystallinity measurement method adopts NB/SH/T 6024-2021 method.

According to one embodiment of the fourth series of composite start-up catalyst of the above first aspect, in the start-up catalyst, Component A catalyst has a content of particles with a particle diameter of 0-20 µm ≤ 3.0 vol%, a content of particles with a particle diameter of 0-40 µm ≤ 18.0 vol%, a content of particles with a particle diameter of 0-149 µm ≥ 90.0 vol%, and an average particle diameter of 60.0-80.0 µm. The particle diameter refers to the diameter of the particles.

For the catalyst of the present invention, the particle diameter distribution refers to NB/SH/T 0951-2017 Determination of Particle Diameter Distribution of Catalytic Cracking Catalysts (Laser Scattering Method). The content of particles with a particle diameter of 0-20 µm refers to the cumulative volume fraction of particles with a diameter of 0-20 micrometers, and similarly for the content of particles with a particle diameter of 0-40 µm, 0-149 µm.

According to one embodiment of the fourth series of composite start-up catalyst of the above first aspect, in the start-up catalyst, Component A catalyst has a cracking activity of 55-65. In the present invention, the measurement method of cracking activity is conducted according to NB/SH/T 0952-2017, "Microreactivity of Catalytic Cracking Catalysts". Said Component A catalyst may be a catalytic cracking equilibrium catalyst.

According to one embodiment of the fourth series of composite start-up catalyst of the above first aspect, in the catalyst, said Component B catalyst has an apparent bulk density of 0.80-0.94 g/mL and an abrasion index ≤ 2.0. Apparent bulk density measurement refers to standard: NB/SH/T 0954-2017 Determination Method of Apparent Bulk Density of Catalytic Cracking Catalysts; abrasion index measurement refers to: NB/SH/T 0964-2017 Determination of Attrition Index of Catalytic Cracking Catalysts by Straight Tube Method.

According to one embodiment of the fourth series of composite start-up catalyst of the above first aspect, in the catalyst, Component B catalyst has a content of particles with a particle diameter of 0-20 µm ≤ 2.0 vol%, a content of particles with a particle diameter of 0-40 µm ≤ 18.0 vol%, a content of particles with a particle diameter of 0-149 µm ≥ 90.0 vol%, and/or, an average particle diameter of 60.0-85.0 µm.

According to one embodiment of the fourth series of composite start-up catalyst of the above first aspect, in the catalyst, the active component of Component B catalyst is a modified small crystal grain Y-type zeolite and optionally a ZSM-5 zeolite, based on the dry basis weight of Component B catalyst, the content of the active component on a dry basis is 5-15 wt% of Component B catalyst; the ZSM-5 zeolite is a conventional ZSM-5 zeolite, for example, the ZSM-5 zeolite can be a conventional ZSM-5 zeolite or a hierarchical-porous ZSM-5 zeolite or a metal-modified hierarchical-porous ZSM-5 zeolite or a hollow mesoporous ZSM-5 zeolite. The conventional ZSM-5 zeolite refers to conventionally produced ZSM-5 zeolite without mesopores, which can be hydrogen-form ZSM-5 zeolite, or ZSM-5 zeolite modified with phosphorus and/or a modifying metal.

According to one embodiment of the fourth series of composite start-up catalyst of the above first aspect, based on dry basis, the weight ratio of modified small crystal grain Y-type zeolite to ZSM-5 zeolite is greater than 2, for example 2-100:1 or 2-10:1.

The modified small crystal grain Y-type zeolite can be commercially available or prepared according to existing methods, for example, according to the method disclosed in Chinese patent application 202011180404.5 (CN114433215B), for example, prepared by method according to any one of claims 2-17 or any one of Examples 1-3 of that application. The average crystal grain size of the modified small crystal grain Y-type zeolite is preferably 300-700 nm, for example 400 nm, 500 nm, and 600 nm; it is calculated by the XRD method using the Scherrer formula. The modification refers to: rare earth modification and gas phase ultrastabilization and/or hydrothermal ultrastabilization modification.

The modified small crystal grain Y-type zeolite may have a rare earth element content, calculated as RE₂O₃, not exceeding 20 wt%, for example 1-20 wt% or 2-18 wt%.

According to one embodiment of the fourth series of composite start-up catalyst of the above first aspect, the modified small crystal grain Y-type zeolite has a silica-alumina ratio (SiO₂/Al₂O₃ molar ratio) of, for example, 5.1-10.

According to one embodiment of the fourth series of composite start-up catalyst of the above first aspect, in the start-up catalyst, Component B catalyst further comprises a matrix support, the content of which is 85-95 wt% of Component B catalyst, the matrix support being selected from one or more of natural clay, alumina support, and silica support; preferably, said alumina support is one or more of alumina sol, acidified pseudo-boehmite, hydrated alumina, and activated alumina; said silica support is one or more of neutral silica sol, acidic silica sol, or alkaline silica sol.

According to one embodiment of the fourth series of composite start-up catalyst of the above first aspect, Component B catalyst comprises 2-10 wt% of modified small crystal grain Y-type zeolite, 1-5 wt% of ZSM-5 zeolite, 65-85 wt% of clay such as kaolin, 3-10 wt% of pseudo-boehmite, 3-10 wt% of alumina sol, and 3-10 wt% of silica sol.

According to one embodiment of the fourth series of composite start-up catalyst of the above first aspect, in the catalyst, the content or loading of metal oxide (referred to as modifying metal oxide) in Component C catalyst is 2-10 wt%, based on the weight of Component C catalyst. The metal oxide may be one or more of magnesium oxide, barium oxide, strontium oxide, and radium oxide.

According to one embodiment of the fourth series of composite start-up catalyst of the above first aspect, in the catalyst, Component C catalyst may be obtained by modifying inert microspheres with modifying metal elements, i.e., loading metal elements, e.g., by impregnation with a metal salt solution, or by adding metal elements, e.g., metal salts, to a catalyst precursor, followed by spray drying. The modifying metal element in Component C catalyst is one or more of Mg, Ba, Sr, Ra, preferably Mg and/or Ba.

According to one embodiment of the fourth series of composite start-up catalyst of the above first aspect, Component C catalyst comprises: 3-10 wt% of pseudo-boehmite, 3-10 wt% of alumina sol, 3-10 wt% of silica sol, 2-10 wt% of alkaline earth metal oxide, and 70-89 wt% of clay, for example, kaolin. The alkaline earth metal is one or more of Mg, Ba, Sr, Ra, preferably Mg and/or Ba.

According to one embodiment of the fourth series of composite start-up catalyst of the above first aspect, in the start-up catalyst according to the present invention, the metal salt used for preparing Component C catalyst may be one or more of magnesium nitrate, barium nitrate, strontium nitrate, or radium nitrate.

According to one embodiment of the fourth series of composite start-up catalyst of the above first aspect, the start-up catalyst has an apparent bulk density of 0.90-0.94 g/mL.

According to one embodiment of the fourth series of composite start-up catalyst of the above first aspect, the start-up catalyst has an abrasion index ≤ 2.0; the unit of abrasion index is %h⁻¹.

According to one embodiment of the fourth series of composite start-up catalyst of the above first aspect, the start-up catalyst has a specific surface area ≥110 m²/g, for example 110-200 m²/g.

According to one embodiment of the fourth series of composite start-up catalyst of the above first aspect, the start-up catalyst has a nickel content ≤5000 µg/g, for example 500-4500 µg/g, a vanadium content ≤4000 µg/g, for example 200-3500 µg/g, an iron content ≤4000 µg/g, for example 500-4000 µg/g, a sodium content ≤2000 µg/g, for example 100-1500 µg/g, a calcium content ≤2000 µg/g, for example 50-1800 µg/g, a content of particles with a particle diameter of 0-20 µm ≤ 2.0 vol%, a content of particles with a particle diameter of 0-40 µm ≤ 18.0 vol%, a content of particles with a particle diameter of 0-149 µm ≥ 90.0 vol%, and/or, an average particle diameter of 65.0-85.0 µm.

According to one embodiment of the fourth series of composite start-up catalyst of the above first aspect, the start-up catalyst has a cracking activity of 55-65, a coke factor ≤ 0.125, for example 0.05-0.12, a gasoline factor ≥ 0.430, for example 0.43-0.48, and a propylene factor ≥ 0.420, for example 0.42-0.47. The cracking activity of the start-up catalyst is determined using the NB/SH/T 0952-2017 method.

In the present invention, the measurement methods for coke factor, gasoline factor, and propylene factor are as follows: reaction temperature of 520°C, catalyst-to-oil weight ratio of 10:1, weight hourly space velocity of 10 h⁻¹, evaluation is performed on a fixed fluidized bed unit using a hydrogenated heavy oil feedstock, conversion rate= dry gas yield + LPG yield + gasoline yield + coke yield. Coke factor = coke yield/conversion rate, gasoline factor = gasoline yield/conversion rate, propylene factor = propylene yield/LPG yield, wherein the yields are weight yields.

According to one embodiment of the fourth series of composite start-up catalyst of the above first aspect, the start-up catalyst is obtained by physically blending Component A catalyst, Component B catalyst, and Component C catalyst in a certain proportion.

According to a second aspect of the present invention, the present invention provides a method for preparing the composite start-up catalyst according to the above first aspect, comprising: preparing Component B catalyst and optional Component C catalyst, and physically mixing Component A catalyst, Component B catalyst, and optional Component C catalyst.

According to a first series method of the second aspect, which is a method for preparing the first series of composite start-up catalyst according to the above first aspect, it comprises: preparing Component B catalyst, and physically blending said Component A catalyst and said Component B catalyst in a certain proportion, wherein the dry basis weight ratio of Component A catalyst : Component B catalyst is (15-95):(5-85), for example 80-95:5-20.

According to one embodiment of the first series of preparation method of the second aspect, Component A catalyst has a deep cracking activity of 55-65. Said Component A catalyst may be a deep catalytic cracking equilibrium catalyst, or a treated deep catalytic cracking equilibrium catalyst obtained by treating an equilibrium catalyst; said treatment may include demetallization treatment and/or particle diameter adjustment treatment. Said demetallization treatment may employ one or more of chemical demetallization treatment and physical demetallization treatment. Said chemical demetallization treatment is, for example, ammonia method, acid method demetallization treatment, e.g., using sulfuric acid solution or citric acid solution for demetallization treatment. Said physical demetallization treatment is, for example, magnetic separation. Said particle diameter adjustment treatment is, for example, purging with gas to remove fine powder, or sieving. Said deep catalytic cracking equilibrium catalyst is an equilibrium catalyst produced by a deep catalytic cracking unit, for example, a DCC unit equilibrium catalyst, and said catalytic cracking equilibrium catalyst is an equilibrium catalyst produced by a catalytic cracking unit.

According to one embodiment of the first series of preparation method of the second aspect, the preparation method of Component B catalyst comprises: forming a slurry from a matrix support, a hollow hierarchical-porous ZSM-5 nanocrystal material, and water, spray drying, and optionally calcining. Alternatively, the preparation method of Component B catalyst comprises: mixing a hollow hierarchical-porous ZSM-5 nanocrystal material, a support, and water and forming a slurry, wherein the support is, for example, one or more of alumina sol, silica sol, acidified pseudo-boehmite, hydrated alumina, and activated alumina.

According to one embodiment of the first series of preparation method of the second aspect, the preparation method of Component B catalyst comprises:
1. mixing pseudo-boehmite and water uniformly, adding hydrochloric acid to achieve an acid-to-alumina ratio of 0.15-0.25 (weight ratio of HCl to pseudo-boehmite calculated as Al₂O₃), then aging at 60-75°C for 1-2 hours to form a first slurry, the alumina content of the first slurry is preferably 8-15 wt%;
2. forming a second slurry from the first slurry, active component, alumina sol, kaolin, optional silica sol, and water; the solid content of the second slurry is preferably 20-40 wt%;
3. spray drying the second slurry;
4. calcining at a calcination temperature of 400°C or above, for example 500-600°C, for a calcination time of 1 hour or more, for example 2-5 hours;
5. exchanging with an ammonium salt.

According to one embodiment of the preparation method of Component B catalyst, the step (5) is carried out as follows: mixing the catalyst particles obtained from the spray drying, an ammonium salt, and water in a weight ratio of 1:(0.1-1):(5-15) to perform ammonium exchange, and optionally washing, so that the Na₂O content in the catalyst particles is less than 0.15 wt%; preferably, the conditions for the ammonium exchange include: a temperature of 40°C or above, for example 50-100°C, and a time of 0.5 hours or above, for example 0.5-2 hours; the ammonium salt is selected from one or more of ammonium chloride, ammonium sulfate, and ammonium nitrate.

According to one embodiment of the first series of preparation method of the second aspect, in the preparation method of Component B catalyst, the matrix support is selected from one or more of natural clay, alumina support, and silica support; preferably, said alumina support is one or more of alumina sol, acidified pseudo-boehmite, hydrated alumina, and activated alumina; said silica support is one or more of neutral silica sol, acidic silica sol, or alkaline silica sol.

According to a second series of method of the second aspect, which is a method for preparing the second series of composite start-up catalyst according to the above first aspect, it comprises: preparing Component B catalyst and optional Component C catalyst, and physically blending said Component A catalyst, said Component B catalyst, and Component C catalyst in a certain proportion, wherein the dry basis weight ratio of Component A catalyst : Component B catalyst : Component C catalyst is (20-90):(5-65):(5-15), for example (60-90):(5-30):(5-10).

According to one embodiment of the second series of preparation method of the second aspect, Component A catalyst has a deep cracking activity of 55-65. Said Component A catalyst is an equilibrium catalyst, which may be a deep catalytic cracking equilibrium catalyst, or obtained by treating an equilibrium catalyst; said treatment may include demetallization treatment and/or particle diameter adjustment treatment. Said demetallization treatment may employ one or more of chemical demetallization treatment and physical demetallization treatment. Said chemical demetallization treatment is, for example, ammonia method, acid method demetallization treatment, e.g., using sulfuric acid solution or citric acid solution for demetallization treatment. Said physical demetallization treatment is, for example, magnetic separation. Said particle diameter adjustment treatment is, for example, purging with gas to remove fine powder, or sieving. Said deep catalytic cracking equilibrium catalyst is an equilibrium catalyst produced by a deep catalytic cracking unit, for example, a DCC unit equilibrium catalyst, and said catalytic cracking equilibrium catalyst is an equilibrium catalyst produced by a catalytic cracking unit.

According to one embodiment of the second series of preparation method of the second aspect, the method for preparing Component B catalyst comprises: mixing a matrix support, a ZSM-5 zeolite, and water to form a slurry, spray drying, and optionally calcining.

According to one embodiment of the second series of preparation method of the second aspect, the method for preparing Component B catalyst comprises: mixing and pulping a ZSM-5 zeolite, a support, and water, wherein the support is, for example, one or more of alumina sol, silica sol, acidified pseudo-boehmite, hydrated alumina, and activated alumina.

According to one embodiment of the second series of preparation method of the second aspect, the method for preparing Component B catalyst comprises:
(1) mixing pseudo-boehmite and water uniformly, adding hydrochloric acid to an acid-to-alumina ratio of 0.15-0.25 (weight ratio of HCl to pseudo-boehmite calculated as Al₂O₃), aging at 60-75°C for 1-2 hours to form a first slurry, the alumina content of the first slurry is preferably 8-15 wt%;
(2) forming a second slurry from the first slurry, active component, alumina sol, kaolin, optional silica sol, and water; the solid content of the second slurry is preferably 20-40 wt%;
(3) spray drying the second slurry;
(4) calcining at a calcination temperature of 400°C or above, for example 500-600°C, for a calcination time of 1 hour or more, for example 2-5 hours;
(5) exchanging with an ammonium salt.

According to one embodiment of the method for preparing the above Component B catalyst, the step (5) is carried out as follows: mixing the catalyst particles obtained from the spray drying, an ammonium salt, and water in a weight ratio of 1:(0.1-1):(5-15) to perform ammonium exchange, and optionally washing the catalyst particles, so that the Na₂O content in the catalyst particles is less than 0.15 wt%; the conditions for the ammonium exchange include: a temperature of 40°C or above, for example 50-100°C, and a time of 0.5 hours or above, for example 0.5-2 hours; the ammonium salt is selected from one or more of ammonium chloride, ammonium sulfate, and ammonium nitrate.

According to one embodiment of the second series of preparation method of the second aspect, in the preparation method of Component B catalyst, the matrix support is selected from one or more of natural clay, alumina support, and silica support; preferably, said alumina support is one or more of alumina sol, acidified pseudo-boehmite, hydrated alumina, and activated alumina; said silica support is one or more of neutral silica sol, acidic silica sol, or alkaline silica sol.

According to one embodiment of the second series of preparation method of the second aspect, in the method for preparing Component C catalyst, the matrix support is selected from one or more of natural clay, alumina support, and silica support; preferably, said alumina support is one or more of alumina sol, acidified pseudo-boehmite, hydrated alumina, and activated alumina; said silica support is one or more of neutral silica sol, acidic silica sol, or alkaline silica sol.

According to one embodiment of the second series of preparation method of the second aspect, in the method for preparing Component C catalyst, the modification with the modifying metal is carried out by impregnation: the catalyst particles obtained from spray drying can be mixed with a solution containing a modifying metal compound to perform impregnation, followed by drying and calcining. The impregnation is, for example, equal volume impregnation or excess impregnation.

According to one embodiment of the second series of preparation method of the second aspect, the method for preparing Component C catalyst comprises:
A. mixing pseudo-boehmite and water uniformly, adding hydrochloric acid to an acid-to-alumina ratio of 0.15-0.25 (weight ratio of HCl to pseudo-boehmite calculated as Al₂O₃), aging at 60-75°C for 1-2 hours to form a third slurry, the alumina content of the third slurry is preferably 8-15 wt%;
B. forming a fourth slurry from the third slurry, alumina sol, kaolin, optional silica sol, and water; the solid content of the fourth slurry is preferably 20-40 wt%;
C. spray drying;
D. calcining at a calcination temperature, for example, of 500-600°C, for a calcination time, for example, of 1-5 hours;
E. impregnating the product of step D with an aqueous solution of an alkaline earth metal salt at an impregnation temperature, for example, of 40-60°C, for an impregnation time, for example, of 0.5-2.5 hours, drying, and calcining at a calcination temperature, for example, of 500-600°C, for a calcination time, for example, of 1-5 hours. The impregnation can be equal volume impregnation or excess impregnation.

According to one embodiment of the second series of preparation method of the second aspect, the method for preparing Component C catalyst comprises:
S1. mixing pseudo-boehmite and water uniformly, adding hydrochloric acid to an acid-to-alumina ratio of 0.15-0.25 (weight ratio of HCl to pseudo-boehmite calculated as Al₂O₃), aging at 60-75°C for 1-2 hours to form a fifth slurry, the alumina content of the fifth slurry is preferably 8-15 wt%;
S2. forming a sixth slurry from the fifth slurry, an alkaline earth metal salt, alumina sol, kaolin, optional silica sol, and water; the solid content of the sixth slurry is preferably 20-40 wt%;
S3. spray drying;
S4. calcining at a calcination temperature, for example, of 500-600°C, for a calcination time, for example, of 1-5 hours.

Preferably, in the preparation methods of Component B catalyst and Component C catalyst, the calcination temperature in the calcination can each be 400-600°C, and the calcination time is, for example, 1-6 h.

According to one embodiment of the second series of preparation method of the second aspect, the methods for preparing Component B catalyst or Component C catalyst may each further comprise: mixing the catalyst particles obtained from the spray drying, an ammonium salt, and water in a weight ratio of 1:(0.1-1):(5-15) to perform ammonium exchange, and optionally washing, so that the Na₂O content in the catalyst particles is less than 0.15 wt%. Preferably, the conditions for the ammonium exchange include: a temperature of 50-100°C and a time of 0.5-2 hours. The ammonium salt may be selected from one or more of ammonium chloride, ammonium sulfate, and ammonium nitrate.

According to a third series of method of the second aspect, which is a method for preparing the third series of composite start-up catalyst according to the above first aspect, it comprises physically mixing Component A catalyst and Component B catalyst uniformly.

According to one embodiment of the third series of preparation method of the second aspect, the method further comprises preparing the Component B catalyst and an optional Component C catalyst, wherein the preparation method of Component B catalyst comprises: mixing a support and/or support precursor, a modified small crystal grain Y-type zeolite material, and water, pulping to form a slurry, spray drying, and optionally calcining to obtain catalyst microspheres; subjecting the obtained catalyst microspheres to ammonium exchange, wherein the ammonium exchange results in a Na₂O content in the obtained Component B catalyst of less than 0.15 wt%; preferably, mixing the catalyst microspheres, an ammonium salt, and water in a weight ratio of 1:(0.1-1):(5-15) to perform ammonium exchange; and, the conditions for the ammonium exchange include: a temperature of 50-100°C and a time of 0.5-2 hours, and the ammonium salt is selected from one or more of ammonium chloride, ammonium sulfate, and ammonium nitrate; and/or, the preparation method of Component C catalyst comprises: modifying inert microspheres with a metal element, or adding a metal element to a catalyst precursor, followed by spray drying.

According to one embodiment of the third series of preparation method of the second aspect, the preparation method of Component B catalyst comprises mixing a modified small crystal grain Y-type zeolite material, a support, and water to form a slurry, wherein the support is, for example, one or more of alumina sol, silica sol, acidified pseudo-boehmite, hydrated alumina, and activated alumina.

According to a preferred embodiment, the preparation method of Component B catalyst comprises:
1. mixing pseudo-boehmite and water uniformly, adding hydrochloric acid to an acid-to-alumina ratio of 0.15-0.25:1 (weight ratio of HCl to pseudo-boehmite calculated as Al₂O₃), aging at 60-75°C for 1-2 hours to form a first slurry, the alumina content of the first slurry is preferably 8-15 wt%;
2. forming a second slurry from the first slurry, active component, alumina sol, kaolin, optional silica sol, and water; the solid content of the second slurry is preferably 20-40 wt%;
3. spray drying;
4. calcining at a calcination temperature, for example, of 500-600°C, for a calcination time, for example, of 2-5 hours;
5. exchanging with an ammonium salt.

According to a more preferred embodiment, the preparation method of Component B catalyst further comprises ammonium exchange: mixing the catalyst particles obtained from the spray drying, an ammonium salt, and water in a weight ratio of 1:(0.1-1):(5-15) to perform ammonium exchange, and optionally washing, so that the Na₂O content in the catalyst microspheres is less than 0.15 wt%; the conditions for the ammonium exchange include: a temperature of 50-100°C and a time of 0.5-2 hours; the ammonium salt is selected from one or more of ammonium chloride, ammonium sulfate, and ammonium nitrate.

According to a fourth series of method of the second aspect, which is a method for preparing the fourth series of composite start-up catalyst according to the above first aspect, it comprises physically mixing Component A catalyst, Component B catalyst, and Component C catalyst uniformly.

According to one embodiment of the fourth series of preparation method of the second aspect, the preparation method of Component B catalyst in the start-up catalyst comprises: pulping a slurry of a matrix support, a modified small crystal grain Y-type zeolite, a ZSM-5 zeolite and water, spray drying, and optionally calcining.

According to one embodiment of the fourth series of preparation method of the second aspect, the preparation method of Component C catalyst in the start-up catalyst is selected from the following methods: Method 1, comprising: pulping a matrix support, spray drying, performing metal modification by impregnation, drying, and calcining; or, Method 2, comprising: mixing a matrix support and a metal salt solution uniformly, pulping, spray drying, and optionally calcining.

According to one embodiment of the fourth series of preparation method of the second aspect, Component C catalyst in the start-up catalyst is a mixture of compositions obtained by Method 1 and Method 2 above.

According to one embodiment of the fourth series of preparation method of the second aspect, the preparation method of Component B and/or Component C catalyst in the start-up catalyst further comprises: mixing the catalyst particles obtained from the spray drying, an ammonium salt, and water in a weight ratio of 1:(0.1-1):(5-15) to perform ammonium exchange, and optionally washing, so that the Na₂O content in Component B catalyst and Component C catalyst is each less than 0.15 wt%; wherein the conditions for the ammonium exchange include: a temperature of 50-100°C and a time of 0.5-2 hours; the ammonium salt is selected from one or more of ammonium chloride, ammonium sulfate, and ammonium nitrate.

According to a third aspect of the present invention, there is provided the use of the composite start-up catalyst according to the present invention in the start-up of a new catalytic cracking or deep catalytic cracking unit or a revamped catalytic cracking or deep catalytic cracking unit. The application includes: new start-up after unit revamp, or rapid replacement after equilibrium catalyst poisoning, or catalyst replenishment during abnormal unit catalyst loss, enabling efficient and stable start-up or rapid equilibrium catalyst replacement, and rapid catalyst replenishment.

According to one embodiment of the first series of use of the third aspect of the present invention, the first series of composite start-up catalyst according to the above first aspect is used in a start-up method for a new deep catalytic cracking unit or a revamped deep catalytic cracking unit; preferably, the deep catalytic cracking unit is a deep catalytic cracking unit for heavy oil.

According to one embodiment of the second series of use of the third aspect of the present invention, the second series of composite start-up catalyst according to the above first aspect is used in a start-up method for a new deep catalytic cracking unit or a revamped deep catalytic cracking unit; preferably, the deep catalytic cracking unit is a deep catalytic cracking unit for high-density heavy oil.

According to one embodiment of the first and second series of use of the third aspect of the present invention, the deep catalytic cracking unit adopts the RTC process.

According to one embodiment of the third series of use of the third aspect of the present invention, the third series of composite start-up catalyst according to the above first aspect is used in a start-up method for a new catalytic cracking unit or a revamped catalytic cracking unit.

According to one embodiment of the fourth series of use of the third aspect of the present invention, the fourth series of composite start-up catalyst according to the above first aspect is used in a start-up method for a new catalytic cracking unit or a revamped catalytic cracking unit; preferably, the catalytic cracking unit is a catalytic cracking unit for maximizing propylene and gasoline production.

According to a fourth aspect of the present invention, the present invention also provides a start-up method for a catalytic cracking or deep catalytic cracking unit, which comprises introducing a feedstock oil into the unit during the start-up phase of the catalytic cracking or deep catalytic cracking unit to contact a fluidized composite start-up catalyst according to the present invention to carry out a catalytic cracking or deep catalytic cracking reaction.

According to a first series of start-up method of the fourth aspect of the present invention, there is provided a start-up method for a deep catalytic cracking unit for heavy oil, wherein during the start-up phase of the deep catalytic cracking unit, the heavy oil is introduced into a deep catalytic cracking reactor to contact a fluidized first series composite start-up catalyst according to the first aspect of the present invention to carry out a deep catalytic cracking reaction.

According to one embodiment of the first series of start-up method of the fourth aspect, the method further comprises a step of adding the deep catalytic cracking catalyst normally used in the unit operation during the start-up process. According to one embodiment, the deep catalytic cracking catalyst normally used in the unit operation contains 20-60 wt% of a shape-selective zeolite, 30-80 wt% of a support, and 5-10 wt% of other zeolites. The support is, for example, one or more of alumina, silica, silica-alumina, clay, phosphorus alumina gel, zirconia, and titania. The shape-selective zeolite is, for example, ZSM-5 zeolite. The other zeolites are, for example, one or more of Y-type zeolite and beta zeolite.

According to a second series of start-up method of the fourth aspect, there is provided a start-up method for a high-density deep catalytic cracking unit for heavy oil, wherein during the start-up phase of the deep catalytic cracking unit, the high-density heavy oil is introduced into a deep catalytic cracking reactor to contact a fluidized second series composite start-up catalyst according to the first aspect of the present invention to carry out a deep catalytic cracking reaction.

According to one embodiment of the first and second series of start-up method of the fourth aspect of the present invention, the composite start-up catalyst has a coke factor ≤ 0.070, for example 0.02-0.07, and/or, the composite start-up catalyst has a propylene factor ≥ 0.44, for example 0.44-0.8. The method with propylene factor ≥ 0.44 is particularly suitable for the start-up of a deep catalytic cracking unit. In the present invention, the coke factor and propylene factor are obtained by evaluation reaction using "a fixed fluidized bed evaluation unit, with a feedstock of heavy oil having a density of 0.87-0.90 g/ml at 20°C or high-density heavy oil having a density of 0.91-0.95 g/ml at 20°C, a reaction temperature of 570°C, a catalyst-to-oil weight ratio of 10:1, and a weight hourly space velocity of 10 h⁻¹"; the density is measured at 20°C. In the reaction products obtained by the above method, coke factor = coke yield/conversion rate; in the reaction products obtained by the above method, propylene factor = propylene yield/LPG yield.

According to one embodiment of the first and second series of start-up method of the fourth aspect of the present invention, the method further comprises: separating the oil and gas products of the deep catalytic cracking reaction from the catalyst, stripping the catalyst, introducing the catalyst into a regenerator for regeneration, and then recycling it to the deep catalytic cracking reactor to perform reaction, introducing the oil and gas products into a subsequent oil and gas separation unit to perform separation. Preferably, the longitudinal section of the reactor of the deep catalytic cracking unit has an inverted trapezoidal structure.

According to a third series of start-up method of the fourth aspect of the present invention, there is provided a start-up method for a catalytic cracking unit for heavy oil, wherein during the start-up phase of the catalytic cracking unit, the heavy oil is introduced into the catalytic cracking unit to contact a fluidized third series composite start-up catalyst according to the above first aspect to carry out a catalytic cracking reaction; preferably, the heavy oil is an intermediate base heavy oil.

According to the third series of start-up method of the fourth aspect of the present invention, during the start-up process, the method further comprises a step of adding the catalytic cracking catalyst normally used in the unit operation. Preferably, the catalytic cracking catalyst normally used in the unit operation contains 20-60 wt% of Y-type zeolite, 30-80 wt% of a support, and 5-10 wt% of other zeolites. The support is, for example, one or more of alumina, silica, silica-alumina, clay, phosphorus alumina gel, zirconia, and titanium oxide. The shape-selective zeolite is, for example, ZSM-5 zeolite. The other zeolites are, for example, one or more of ZSM-5 zeolite and beta zeolite.

The third series of composite start-up catalyst according to the first aspect of the present invention is used in the start-up phase of a catalytic cracking unit to enable efficient and stable start-up and smooth replacement of the unit, said start-up phase including shutdown for maintenance, start-up of a new unit, rapid replacement after equilibrium catalyst poisoning, and abnormal unit catalyst loss. For example, using the start-up catalyst for start-up allows the reaction indicators of the catalytic cracking unit, such as product distribution, to quickly reach expected values, significantly shortening the start-up time.

The preparation method of the third series of composite start-up catalyst according to the first aspect of the present invention, by compounding a catalytic cracking equilibrium catalyst with a specific Component B catalyst, a start-up catalyst having the above properties can be obtained. Furthermore, because it is prepared using an equilibrium catalyst, the start-up catalyst of the present invention has a low cost.

In the third series of start-up method according to the fourth aspect of the present invention, by using the start-up catalyst, before adding the catalytic cracking catalyst normally used in the unit operation, it is possible to avoid the problems associated with directly using an equilibrium catalyst with low matching to the target unit for start-up, such as fluidization problems and increased dry gas and coke, which affect the normal fluidization of the unit and the rapid attainment of target product distribution. Because the start-up catalyst has good fluctuation tolerance, after replacing a larger amount of fresh catalyst, the unit can achieve a new steady state faster than with existing start-up catalysts at a higher replacement amount, thereby making the start-up efficient and smooth.

According to a fourth series of start-up method of the fourth aspect of the present invention, there is provided a start-up method for a catalytic cracking unit for high-density heavy oil, wherein during the start-up phase of the catalytic cracking unit, the heavy oil is introduced into the catalytic cracking unit to contact a fluidized fourth series composite start-up catalyst according to the above first aspect to carry out a catalytic cracking reaction; preferably, the heavy oil is hydrogenated heavy oil.

According to one embodiment of the fourth series of start-up method of the fourth aspect, the catalyst is used in a start-up method for a catalytic cracking unit designed to maximize propylene and gasoline production, such as MIP series technology units, particularly MIP-CGP catalytic cracking units.

The fourth series composite start-up catalyst according to the above first aspect can be used for the start-up phase of units designed to maximize gasoline and propylene production to enable efficient and stable start-up of the unit and allow the unit to operate smoothly and quickly, for example, for the start-up phase of MIP series technology units, particularly MIP-CGP catalytic cracking units, including but not limited to start-up after unit shutdown for maintenance, new unit start-up, rapid replacement after equilibrium catalyst poisoning, or catalyst replenishment during abnormal unit catalyst loss. For example, the existing technology MIP units such as MIP-CGP catalytic cracking units uses equilibrium catalyst for start-up, which often require one month or longer to achieve smooth unit operation and reach the design target, whereas the catalyst of the present invention can achieve smooth unit operation and reach the design target within one week.

In particular, the present invention provides the following four groups of technical solutions, wherein:
the first group of technical solutions includes:
1. A start-up catalyst for a deep catalytic cracking unit, comprising Component A catalyst and Component B catalyst, wherein based on the dry basis weight of the start-up catalyst, the content of Component A catalyst is 15-95 wt%, and the content of Component B catalyst is 5-85 wt%, wherein,
   Component B catalyst is a fresh catalyst, the active component of which comprises a hollow hierarchical-porous ZSM-5 nanocrystal material, based on dry basis, the content of the hollow hierarchical-porous ZSM-5 nanocrystal material is 5-15 wt% of Component B catalyst;
   Component A catalyst has a deep cracking activity of 55-65.
2. The start-up catalyst according to item 1, wherein Component A catalyst has a specific surface area ≥100 m²/g, nickel content ≤6000 µg/g, vanadium content ≤3000 µg/g, rare earth element content ≤10000 µg/g; said Component A is a deep catalytic cracking equilibrium catalyst and/or a deep catalytic cracking equilibrium catalyst after treatment.
3. The start-up catalyst according to items 1-2, wherein Component A catalyst has the following particle diameter distribution: content of particles with a particle diameter of 0-20 µm ≤ 3.0 vol%, content of particles with a particle diameter of 0-40 µm ≤ 18.0 vol%, content of particles with a particle diameter of 0-149 µm ≥ 90.0 vol%, average particle diameter of 60.0-80.0 µm; said Component B catalyst has a content of particles with a particle diameter of 0-20 µm ≤ 2.0 vol%, a content of particles with a particle diameter of 0-40 µm ≤ 18.0 vol%, a content of particles with a particle diameter of 0-149 µm ≥ 90.0 vol%, and an average particle diameter of 60.0-85.0 µm.
4. The start-up catalyst according to items 1-3, wherein the start-up catalyst has a nickel content ≤4000 µg/g, a vanadium content ≤2500 µg/g, a content of particles with a particle diameter of 0-20 µm ≤ 2.0 vol%, a content of particles with a particle diameter of 0-40 µm ≤ 18.0 vol%, a content of particles with a particle diameter of 0-149 µm ≥ 90.0 vol%, and an average particle diameter of 65.0-85.0 µm.
5. The start-up catalyst according to items 1-4, wherein Component B catalyst has an apparent bulk density of 0.8-0.94 g/mL and an abrasion index ≤ 2; and/or, said start-up catalyst has an apparent bulk density of 0.9-0.94 g/mL and an abrasion index ≤ 2.
6. The start-up catalyst according to items 1-5, wherein Component B catalyst further comprises a support, based on dry basis, the support content is 85-95 wt% of Component B catalyst, the support being selected from one or more of natural clay, alumina support, and silica support; preferably, said alumina support is one or more of alumina sol, acidified pseudo-boehmite, hydrated alumina, and activated alumina; said silica support is one or more of neutral silica sol, acidic silica sol, or alkaline silica sol.
7. The start-up catalyst according to items 1-6, wherein the hollow hierarchical-porous ZSM-5 nanocrystal material has a hollow structure, an average crystal grain size of 0.2-3.0 µm, a ratio of bulk silicon-aluminum molar ratio to surface silicon-aluminum molar ratio of 1.0-1.5, a total specific surface area of 340-420 m²/g, a mesopore specific surface area of 40-150 m²/g, and the N₂ adsorption-desorption curve exhibits an H4-type hysteresis loop; preferably, the hollow hierarchical-porous ZSM-5 nanocrystal material has a relative crystallinity of 75-95%.
8. The start-up catalyst according to items 1-7, wherein the start-up catalyst has a coke factor ≤ 0.070, a propylene factor ≥ 0.44, and preferably a deep cracking activity of 58-62.
9. A method for preparing the start-up catalyst according to items 1-8, comprising synthesizing Component B catalyst, and mixing Component A catalyst and Component B catalyst, wherein the preparation method of Component B catalyst comprises:
   pulping a matrix support, a hollow hierarchical-porous ZSM-5 nanocrystal material, and water, spray drying, and optionally calcining.
10. The method according to item 9, wherein the preparation method of Component B catalyst further comprises subjecting the catalyst microspheres obtained from the spray drying to ammonium exchange and optionally washing, wherein the ammonium exchange results in a Na₂O content in the obtained Component B catalyst of less than 0.15 wt%; in one embodiment, mixing the catalyst microspheres, an ammonium salt, and water in a weight ratio of 1:(0.1-1):(5-15) to perform ammonium exchange; in one embodiment, the conditions for the ammonium exchange include: a temperature of 50-100°C and a time of 0.5-2 hours, and the ammonium salt is selected from one or more of ammonium chloride, ammonium sulfate, and ammonium nitrate.
11. The method according to items 9-10, wherein Component A catalyst is an equilibrium catalyst, said equilibrium catalyst being a catalytic cracking equilibrium catalyst and/or a deep catalytic cracking equilibrium catalyst, wherein the catalytic cracking equilibrium catalyst is an equilibrium catalyst produced by a catalytic cracking unit, and the deep catalytic cracking equilibrium catalyst is an equilibrium catalyst produced by a deep catalytic cracking unit;
   wherein, in one embodiment, Component A catalyst is a treated equilibrium catalyst obtained by treating an equilibrium catalyst; said treatment includes: demetallization treatment and particle diameter adjustment treatment, said demetallization treatment being, for example, chemical demetallization treatment and/or physical demetallization treatment, such as magnetic separation, and said particle diameter adjustment treatment being, for example, purging with gas to remove fine powder, or sieving.

The second group of technical solutions includes:
1. A composite catalyst, comprising:
   (1) 20-90 wt% of Component A catalyst, said Component A catalyst having a deep cracking activity of 55-65,
   (2) 5-65 wt% of Component B catalyst, the main active component of said Component B catalyst being ZSM-5 zeolite,
   (3) 5-15 wt% of Component C catalyst, said Component C catalyst containing 2-10 wt% of an oxide of a modifying metal, said modifying metal being an alkaline earth metal.
2. The composite catalyst according to item 1, wherein Component A catalyst is an equilibrium catalyst and/or a treated equilibrium catalyst obtained by treating an equilibrium catalyst; said treatment may include demetallization treatment and/or particle diameter adjustment treatment;
   said Component A catalyst has a specific surface area ≥100 m²/g, nickel content ≤6000 µg/g, vanadium content ≤3000 µg/g, rare earth element content ≤10000 µg/g; for example, said Component A catalyst has a specific surface area of 100-200 m²/g; a nickel content of 500-6000 µg/g, a vanadium content of 50-3000 µg/g, a rare earth element content of 500-10000 µg/g; said Component A catalyst preferably has a deep cracking activity of 57-63.
3. The composite catalyst according to items 1-2, wherein Component A catalyst has a particle diameter distribution: content of particles with a particle diameter of 0-20 µm ≤ 3.0 vol%, content of particles with a particle diameter of 0-40 µm ≤ 18.0 vol%, content of particles with a particle diameter of 0-149 µm ≥ 90.0 vol%, average particle diameter of 60.0-80.0 µm.
4. The composite catalyst according to items 1-3, wherein Component B catalyst has an apparent bulk density of 0.80-0.94 g/mL and an abrasion index ≤ 2.0;
   preferably, in Component B catalyst, the content of particles with a particle diameter of 0-20 µm is ≤ 2.0 vol%, the content of particles with a particle diameter of 0-40 µm is ≤ 18.0 vol%, the content of particles with a particle diameter of 0-149 µm is ≥ 90.0 vol%, and the average particle diameter is 60.0-85.0 µm.
5. The composite catalyst according to items 1-4, wherein Component B catalyst comprises: 5-15 wt% of ZSM-5 zeolite on a dry basis, and 85-95 wt% of a matrix support on a dry basis;
   the matrix support is selected from one or more of natural clay, alumina support, and silica support; preferably, said alumina support is one or more of alumina sol, acidified pseudo-boehmite, hydrated alumina, and activated alumina; said silica support is one or more of neutral silica sol, acidic silica sol, or alkaline silica sol.
6. The composite catalyst according to items 1-5, wherein Component C catalyst contains 2-10 wt% of an oxide of a modifying metal and 90-98 wt% of a support; the metal oxide is an alkaline earth metal oxide. The support is selected from one or more of natural clay, alumina support, and silica support; said alumina support is, for example, one or more of alumina sol, acidified pseudo-boehmite, hydrated alumina, and activated alumina; said silica support is, for example, one or more of neutral silica sol, acidic silica sol, or alkaline silica sol.
7. The composite catalyst according to items 1-6, wherein Component C catalyst can be obtained by modifying inert microspheres with the modifying metal element compound, or by adding the modifying metal element compound to an inert microsphere precursor, pulping, and then spray drying; said modifying metal element compound is, for example, one or more of magnesium nitrate, barium nitrate, strontium nitrate, or radium nitrate.
8. The composite catalyst according to items 1-7, wherein the composite catalyst has an apparent bulk density of 0.90-0.94 g/mL, and an abrasion index ≤ 2.0; in the composite catalyst: the content of particles with a particle diameter of 0-20 µm is ≤ 2.0 vol%, the content of particles with a particle diameter of 0-40 µm is ≤ 18.0 vol%, the content of particles with a particle diameter of 0-149 µm is ≥ 90.0 vol%, and the average particle diameter is 65.0-85.0 µm.
9. The composite catalyst according to items 1-8, wherein in the composite catalyst, the nickel content is ≤4000 µg/g, and the vanadium content is ≤2500 µg/g, for example, nickel content, vanadium content.
10. The composite catalyst according to items 1-9, wherein the deep cracking activity of the composite catalyst is 58-62, the coke factor of the composite catalyst is ≤ 0.070, and the propylene factor of the composite catalyst is ≥ 0.44.
11. The composite catalyst according to items 1-10, wherein the content of Component A catalyst is, the content of Component B catalyst is, and the content of Component C catalyst is.
12. A method for preparing the composite catalyst according to items 1-11, comprising physically blending Component A catalyst, Component B catalyst, and Component C catalyst, the preparation method of Component B catalyst comprising: pulping a matrix support, a slurry of ZSM-5 zeolite, and optionally water, spray drying to obtain first catalyst particles, optionally calcining;
   the preparation method of Component C catalyst comprising: mixing a matrix support with optional water, pulping, spray drying to obtain second catalyst particles, performing modification with a modifying metal by impregnation, drying, and calcining; or
   the preparation method of Component C catalyst comprising: mixing a matrix support, a modifying metal salt solution, and optional water, pulping, spray drying to obtain third catalyst particles, optionally calcining;
   wherein the matrix support is selected from one or more of natural clay, alumina support, and silica support.
13. The method according to item 12, wherein the preparation method of Component B catalyst or Component C catalyst each further comprises: mixing the catalyst particles obtained from the spray drying, an ammonium salt, and water to perform ammonium exchange, and optionally washing so that the Na₂O content in the catalyst microspheres is less than 0.15 wt%; the catalyst particles obtained from the spray drying being the first catalyst particles, the second catalyst particles, or the third catalyst particles.
14. A start-up method for a deep catalytic cracking unit for high-density heavy oil, wherein during the start-up phase of the deep catalytic cracking unit, heavier heavy oil is introduced into a deep catalytic cracking reactor to contact a fluidized catalyst to carry out a deep catalytic cracking reaction, the oil and gas products from the deep cracking reaction are separated from the catalyst, the catalyst is stripped and introduced into a regenerator for regeneration and then recycled to the deep catalytic cracking reactor to perform reaction, and the oil and gas products are introduced into a subsequent oil and gas separation unit to perform separation, wherein the catalyst is the composite catalyst according to items 1-10.

The third group of technical solutions includes:
1. A start-up catalyst for a catalytic cracking unit, having the following particle diameter distribution: content of particles with a particle diameter of 0-20 µm ≤ 2.0 vol%, content of particles with a particle diameter of 0-40 µm ≤ 18.0 vol%, content of particles with a particle diameter of 0-149 µm ≥ 90.0 vol%, and an average particle diameter of 65.0-85.0 µm,
   said start-up catalyst has a nickel content ≤5000 µg/g, a vanadium content ≤3500 µg/g, an iron content ≤4500 µg/g,
   said start-up catalyst has: a coke factor ≤ 0.140, a gasoline factor ≥ 0.420,
   preferably, said start-up catalyst has a cracking activity of 55-65.
2. A start-up catalyst for a catalytic cracking unit, comprising Component A catalyst and Component B catalyst, wherein based on the dry basis weight of the start-up catalyst, the content of Component A catalyst is 15-95%, and the content of Component B catalyst is 5-85%, wherein,
   said Component A catalyst is a catalytic cracking equilibrium catalyst and/or a catalytic cracking equilibrium catalyst after treatment;
   said Component B catalyst is a fresh catalyst, the active component of which comprises a modified small crystal grain Y-type zeolite material, based on dry basis, the content of the modified small crystal grain Y-type zeolite material is 5-15 wt% of Component B catalyst;
   preferably, said Component A catalyst has a cracking activity of 55-65.
3. The start-up catalyst according to item 2, wherein Component A catalyst has a specific surface area ≥100 m²/g, a nickel content ≤6000 µg/g, a vanadium content ≤4000 µg/g, an iron content ≤5000 µg/g, a rare earth element content ≥10000 µg/g;
   preferably, Component A catalyst has the following particle diameter distribution: content of particles with a particle diameter of 0-20 µm ≤ 3.0 vol%, content of particles with a particle diameter of 0-40 µm ≤ 18.0 vol%, content of particles with a particle diameter of 0-149 µm ≥ 90.0 vol%, average particle diameter of 60.0-80.0 µm;
   preferably, Component B catalyst has a content of particles with a particle diameter of 0-20 µm ≤ 2.0 vol%, a content of particles with a particle diameter of 0-40 µm ≤ 18.0 vol%, a content of particles with a particle diameter of 0-149 µm ≥ 90.0 vol%, and an average particle diameter of 60.0-85.0 µm.
4. The start-up catalyst according to item 1, 2, or 3, wherein the start-up catalyst has a nickel content ≤5000 µg/g, a vanadium content ≤3500 µg/g, an iron content ≤4500 µg/g, a content of particles with a particle diameter of 0-20 µm ≤ 2.0 vol%, a content of particles with a particle diameter of 0-40 µm ≤ 18.0 vol%, a content of particles with a particle diameter of 0-149 µm ≥ 90.0 vol%, and an average particle diameter of 65.0-85.0 µm.
5. The start-up catalyst according to item 2 or 4, wherein Component B catalyst has an apparent bulk density of 0.80-0.94 g/mL and an abrasion index ≤ 2.0; and/or, said start-up catalyst has an apparent bulk density of 0.90-0.94 g/mL and an abrasion index ≤ 2.0.
6. The start-up catalyst according to item 2 or 5, wherein Component B catalyst further comprises a support, based on dry basis, the support content is 85-95 wt% of Component B catalyst, and the support is selected from one or more of natural clay, alumina support, and silica support; preferably, said alumina support is one or more of alumina sol, acidified pseudo-boehmite, hydrated alumina, and activated alumina; said silica support may be one or more of neutral silica sol, acidic silica sol, or alkaline silica sol.
7. The start-up catalyst according to item 2, wherein said modified small crystal grain Y-type zeolite material has: RE₂O₃ content of 0-18 wt%, Na₂O content not exceeding 1 wt%, unit cell constant of 2.43-2.47 nm, proportion of non-framework aluminum content to total aluminum content not higher than 30%, ratio of B acid amount to L acid amount not less than 2.5, external surface acid amount of 150-300 µmol/g, total specific surface area of 580-650 m²·g⁻¹, average crystal grain size of 0.5-1.0 µm.
8. The start-up catalyst according to item 7, wherein said modified small crystal grain Y-type zeolite material has a relative crystallinity of 45-65% and/or a lattice collapse temperature not lower than 1030°C, said start-up catalyst has a coke factor ≤ 0.140, and said start-up catalyst has a gasoline factor ≥ 0.420.
9. A method for preparing the start-up catalyst according to any one of items 1-8, wherein it comprises: synthesizing Component B catalyst, and mixing Component A catalyst and Component B catalyst, wherein the preparation method of Component B catalyst comprises: mixing a support and/or support precursor/modified small crystal grain Y-type zeolite material and water, pulping to form a slurry, spray drying, and optionally calcining.
10. The method according to item 9, wherein the preparation method of Component B catalyst further comprises subjecting the catalyst microspheres obtained from the spray drying to ammonium exchange, wherein the ammonium exchange results in a Na₂O content in the obtained Component B catalyst of less than 0.15 wt%; in one embodiment, mixing the catalyst microspheres, an ammonium salt, and water in a weight ratio of 1:(0.1-1):(5-15) to perform ammonium exchange; in one embodiment, the conditions for the ammonium exchange include: a temperature of 50-100°C and a time of 0.5-2 hours, and the ammonium salt is selected from one or more of ammonium chloride, ammonium sulfate, and ammonium nitrate.
11. The method according to item 9, wherein Component A catalyst is an equilibrium catalyst, said equilibrium catalyst being a catalytic cracking equilibrium catalyst, wherein the catalytic cracking equilibrium catalyst is an equilibrium catalyst produced by a catalytic cracking unit;
   and/or, Component A catalyst is a treated equilibrium catalyst obtained by treating an equilibrium catalyst produced by a catalytic cracking unit; said treatment includes: demetallization treatment and/or particle diameter adjustment treatment, said demetallization treatment being, for example, chemical demetallization treatment and/or physical demetallization treatment, such as magnetic separation, and said particle diameter adjustment treatment being, for example, purging with gas to remove fine powder, or sieving.
12. Use of the start-up catalyst according to any one of items 1-8 in the start-up of a new catalytic cracking unit or rapid replacement after equilibrium catalyst poisoning or catalyst replenishment during abnormal catalyst loss, said start-up being, for example, start-up after unit shutdown for maintenance or start-up of a new catalytic cracking unit.

The fourth group of technical solutions includes:
1. A catalyst, wherein said catalyst comprises Component A catalyst, Component B catalyst, and Component C catalyst, based on the dry basis weight of the catalyst, the content of Component A catalyst is 20-90%, the content of Component B catalyst is 5-65%, and the content of Component C catalyst is 5-15%, wherein the main active component of Component B catalyst comprises a modified small crystal grain Y-type zeolite and optionally a ZSM-5 zeolite material, Component C catalyst comprises a support and a metal oxide, and the content of the metal oxide in Component C catalyst is 2-10 wt%.
2. The catalyst according to item 1, wherein Component A catalyst is a catalytic cracking catalyst, said Component A catalyst has a specific surface area ≥100 m²/g; nickel content ≤6000 µg/g, vanadium content ≤5000 µg/g, iron content ≤5000 µg/g, sodium content ≤3000 µg/g, calcium content ≤3000 µg/g, Y-type zeolite crystallinity ≥20.0%, ZSM-5 zeolite crystallinity ≥2.0%; said Component A catalyst has a content of particles with a particle diameter of 0-20 µm ≤ 3.0 vol%, a content of particles with a particle diameter of 0-40 µm ≤ 18.0 vol%, a content of particles with a particle diameter of 0-149 µm ≥ 90.0 vol%, and an average particle diameter of 60.0-80.0 µm.
   1. The catalyst according to item 1 or 2, wherein Component A catalyst has a cracking activity of 55-65;
      preferably, Component B catalyst has an apparent bulk density of 0.8-0.94 g/mL and an abrasion index ≤ 2.0;
      said Component B catalyst has a content of particles with a particle diameter of 0-20 µm ≤ 2.0 vol%, a content of particles with a particle diameter of 0-40 µm ≤ 18.0 vol%, a content of particles with a particle diameter of 0-149 µm ≥ 90.0 vol%, and an average particle diameter of 60.0-85.0 µm.
   2. The catalyst according to item 1, wherein Component B catalyst further comprises a matrix support and an active component, based on the dry basis weight of Component B catalyst, the content of the matrix support on a dry basis is 85-95 wt% of Component B catalyst, and the content of the active component on a dry basis is 5-15 wt% of Component B catalyst; the active component of said Component B catalyst is a modified small crystal grain Y-type zeolite and optionally a ZSM-5 zeolite; wherein the ZSM-5 zeolite may be, for example, a conventional ZSM-5 zeolite or a hierarchical-porous ZSM-5 zeolite or a metal-modified hierarchical-porous ZSM-5 zeolite or a hollow mesoporous ZSM-5 zeolite;
      optionally, the weight ratio of modified small crystal grain Y-type zeolite to ZSM-5 zeolite is greater than 2;
      optionally, the modified small crystal grain Y-type zeolite has an average crystal grain size of 300-700 nm; the rare earth content of the modified small crystal grain Y-type zeolite may be 1-20 wt%; the silica-alumina ratio in terms of SiO₂/Al₂O₃ molar ratio is, for example, 5.1-10;
      the matrix support is selected from one or more of natural clay, alumina support, and silica support; preferably, said alumina support is one or more of alumina sol, acidified pseudo-boehmite, hydrated alumina, and activated alumina; said silica support is one or more of neutral silica sol, acidic silica sol, or alkaline silica sol.
   3. The catalyst according to item 1, wherein the metal oxide loading of Component C catalyst is 2-10 wt%, and the metal oxide of Component C catalyst may be one or more of magnesium oxide, barium oxide, strontium oxide, and radium oxide.
   4. The catalyst according to item 1, wherein Component C catalyst can be obtained by modifying inert microspheres with a metal element, or by adding a metal element to a catalyst precursor, followed by spray drying;
      for example, Component C catalyst is prepared by any one or more of the following methods:
      Method 1, comprising: pulping a matrix support, spray drying, performing metal modification by impregnation with a metal salt solution, drying, and calcining;
      Method 2, comprising: mixing a matrix support and a metal salt solution uniformly, pulping, spray drying, and optionally calcining, the metal salt may be selected from one or more of magnesium nitrate, barium nitrate, strontium nitrate, or radium nitrate.
   5. The catalyst according to item 1, wherein the catalyst has an apparent bulk density of 0.90-0.94 g/mL, and an abrasion index ≤ 2.0;
      the catalyst has a nickel content ≤5000 µg/g, a vanadium content ≤4000 µg/g, an iron content ≤4000 µg/g, a sodium content ≤2000 µg/g, a calcium content ≤2000 µg/g;
      the catalyst has a particle diameter distribution: content of particles with a particle diameter of 0-20 µm ≤ 2.0 vol%, content of particles with a particle diameter of 0-40 µm ≤ 18.0 vol%, content of particles with a particle diameter of 0-149 µm ≥ 90.0 vol%, and an average particle diameter of 65.0-85.0 µm;
      preferably, the catalyst has a cracking activity of 55-65, a coke factor ≤ 0.125, for example 0.05-0.12, a gasoline factor ≥ 0.430, for example 0.43-0.48, and a propylene factor ≥ 0.420, for example 0.42-0.47.
   6. The catalyst according to any one of items 1-7, wherein the preparation method of Component B catalyst comprises: pulping a slurry of a matrix support, a small crystal grain Y-type zeolite, a ZSM-5 zeolite and water, spray drying, and optionally calcining;
      optionally, the preparation method of Component B catalyst and/or Component C catalyst further comprises: mixing the catalyst particles obtained from the spray drying, an ammonium salt, and water in a weight ratio of 1:(0.1-1):(5-15) to perform ammonium exchange, and optionally washing, so that the Na₂O content in Component B catalyst and Component C catalyst is each less than 0.15 wt%; the conditions for the ammonium exchange include: a temperature of 50-100°C and a time of 0.5-2 hours; the ammonium salt is selected from one or more of ammonium chloride, ammonium sulfate, and ammonium nitrate.
   7. The catalyst according to item 1, wherein the preparation method of the catalyst is physically blending Component A catalyst, Component B catalyst, and Component C catalyst in a certain proportion.
   8. Use of the catalyst according to any one of items 1-9 in a unit for maximizing propylene and gasoline production by catalytic cracking, said unit being, for example, an MIP catalytic cracking unit, said use including: new start-up after unit revamp, or rapid replacement after equilibrium catalyst poisoning, or catalyst replenishment during abnormal unit catalyst loss, enabling efficient and stable start-up or rapid equilibrium catalyst replacement, and rapid catalyst replenishment.

The utilization of the composite start-up catalyst provided by the present invention in the start-up phase of a catalytic cracking or deep catalytic cracking unit includes start-up after shutdown for maintenance or start-up of a new unit, can achieve efficient and stable start-up of the unit. For example, using the composite start-up catalyst for start-up allows the reaction indicators of the catalytic cracking or deep catalytic cracking unit, such as product distribution, to quickly reach expected values, which can significantly shorten the start-up time.

In the preparation method of the composite start-up catalyst provided by the present invention, by using a catalytic cracking or deep catalytic cracking equilibrium catalyst and compounding it with a specific Component B catalyst and optionally Component C catalyst, a composite start-up catalyst having the above properties can be obtained. Furthermore, since it is prepared by using an equilibrium catalyst, the cost of the catalyst is low.

In the start-up method of catalytic cracking or deep catalytic cracking unit provided by the present invention, by using the composite start-up catalyst, before adding the catalytic cracking or deep catalytic cracking catalyst normally used in the unit operation, it is possible to avoid the disadvantages of high conversion load and high coke yield, and difficulty in stabilization caused by the high activity and high coke factor of existing composite start-up catalysts, and due to lower activity combined with a lower coke factor, and further combined with a higher propylene factor during the start-up process of the catalytic cracking or deep catalytic cracking unit, the unit can be quickly stabilized before adding the catalyst normally used in production. Since the composite start-up catalyst has good fluctuation tolerance, after replacing a larger amount of fresh catalyst, the unit can achieve a new steady state faster than with existing composite start-up catalysts at a higher replacement amount, thereby making the start-up efficient and smooth.

The start-up method provided by the present invention can significantly shorten the start-up time, for example, quickly achieving the expected product distribution, and can complete start-up within about one week.

Other features and advantages of the present invention will be described in detail in the following examples.

### Examples

The following specific embodiments are described in detail with reference to the Figures to illustrate the present invention. It should be understood that the specific embodiments described herein are only for illustrating and explaining the present invention and are not intended to limit the present invention.

The following Examples 1 and 2 were used to illustrate embodiments of the first series of technical solutions according to the first aspect of the present invention; and Comparative Examples 1-2 were used to illustrate the advantages of the technical solutions according to the present invention.

The raw materials used in the examples and comparative examples of the present invention are:
Alumina sol: product from Sinopec Catalyst Co., Ltd. Qilu Branch, Al₂O₃ content being 21.5 wt%.

Silica sol: product from Qingdao Junqiang New Material Co., Ltd., SiO₂ content being 30 wt%, pH 9.5.

Pseudo-boehmite: product from Shandong Aluminum Company, Al₂O₃ content being 62 wt%.

Kaolin: product from China Kaolin Clay Co., Ltd., solid content being 76 wt%.

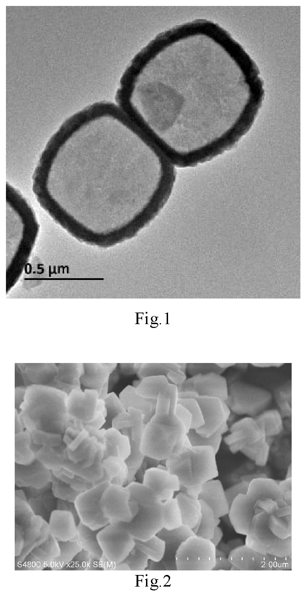

Hollow hierarchical-porous ZSM-5 nanocrystal material 1: its TEM image is shown in FIG. 1, its properties are shown in Table 2.

Modified small crystal grain Y-type zeolite 1: its SEM image is shown in FIG. 2, having an average crystal grain size of about 500 nm, its properties are shown in Table 11, its Source was: Sinopec Catalyst Co., Ltd. Qilu Branch, its silica-alumina ratio (SiO₂/Al₂O₃ molar ratio) was 5.2, the modifying element being lanthanum and its content being12 wt%.

The equilibrium catalysts P1 and P2 used were equilibrium catalysts produced by catalytic cracking units, their properties are shown in Table 1.

The content of metal elements (such as nickel element, vanadium element) or rare earth elements in the equilibrium catalyst was determined according to NB/SH/T 0863 Guide for Determination of Chemical Elements in Sulfurized Catalytic Cracking Catalysts by X-ray Fluorescence Spectrometry or HG/T 5765 Determination method of Metal Elements in Catalytic Cracking Catalysts.

The following Examples 1-1, 1-2, and 2 and Comparative Examples 1-4 were used to illustrate the technical effects of the first series of start-up catalysts according to the first aspect of the present invention:

### Example 1-1

The start-up catalyst used in this example comprised:
(1) Component A catalyst A1:
   Its physical property parameters are shown in Table 1. It was obtained by the following method: an equilibrium catalyst from a deep catalytic cracking DCC unit was subjected to physical cyclone treatment (classifying the spent catalyst using a cyclone separator to separate fine components) to achieve a certain particle diameter requirement; and then subjected to chemical demetallization treatment (contacting the equilibrium catalyst with a sulfuric acid solution to react with harmful metals such as vanadium, nickel, iron, and sodium deposited on the equilibrium catalyst, partially removing these harmful metals to reduce their toxicity) to achieve a certain metal content.
(2) Component B catalyst B1-1:
   Pseudo-boehmite and water were mixed uniformly, concentrated hydrochloric acid with a concentration of 36 wt% was added with stirring at an acid-to-alumina ratio (molar ratio of HCl to pseudo-boehmite calculated as Al₂O₃) of 0.2; the resulting mixture was aged at 70°C for 1.5 hours to obtain an aged pseudo-boehmite slurry; the alumina content of this aged pseudo-boehmite slurry was 12 wt%. The hollow hierarchical-porous ZSM-5 nanocrystal material, alumina sol, silica sol, kaolin, the above aged pseudo-boehmite slurry, and deionized water were mixed uniformly to form a slurry with a solid content of 30 wt%, and the slurry was spray dried to obtain Component B catalyst particles; the Component B catalyst particles were calcined at 550°C for 4 hours; the calcined Component B catalyst particles were exchanged at 80°C for 1 hour according to a weight ratio of Component B catalyst particles : ammonium salt : H₂O = 1:1:10, filtered, the above exchange and filtration process was repeated once, and dried, wherein the ammonium salt was ammonium chloride, and the obtained Component B catalyst B1-1 had a sodium oxide content below 0.15 wt%. The properties of the hollow hierarchical-porous ZSM-5 nanocrystal material are shown in Table 2.

Component A catalyst A1 and Component B catalyst B1-1 were mixed uniformly according to a certain ratio (85:15 by weight) to obtain the start-up catalyst D1-1 of Example 1, the properties of which are shown in Table 3.

### Example 1-2

In this example:
(1) The Component A catalyst A1 used was the same as in Example 1-1;
(2) The Component B catalyst B1-2 used was prepared by the same method as Component B catalyst B1-1 in Example 1-1, but the active component content in Component B catalyst B1-2 was different from that in Component B catalyst B1-1 in Example 1-1.

The Component A catalyst A1 and Component B catalyst B1-2 used were mixed uniformly according to a certain ratio (55:45 by weight) to obtain the start-up catalyst D1-2 of Example 1, the properties of which are shown in Table 3.

### Example 2

The start-up catalyst used in this example comprised:
(1) Component A catalyst A2:
   Its physical property parameters are shown in Table 1. It was obtained from an equilibrium catalyst from a deep catalytic cracking unit (different from the DCC equilibrium catalyst of Example 1), subjected to cyclone treatment to achieve a certain particle diameter; and then subjected to chemical demetallization treatment to achieve a certain metal content.
(2) Component B catalyst B2:
   Pseudo-boehmite and water were mixed uniformly, concentrated hydrochloric acid with a concentration of 36 wt% was added with stirring at an acid-to-alumina ratio of 0.2 (molar ratio of HCl to pseudo-boehmite calculated as Al₂O₃); the resulting mixture was aged at 70°C for 1.5 hours to obtain an aged pseudo-boehmite slurry; the alumina content of this aged pseudo-boehmite slurry was 12 wt%. The hollow hierarchical-porous ZSM-5 nanocrystal material, alumina sol, kaolin, the above aged pseudo-boehmite slurry, and deionized water were mixed uniformly to form a slurry with a solid content of 30 wt%, and the slurry was spray dried to obtain Component B catalyst particles; the Component B catalyst particles were calcined at 550°C for 4 hours; the calcined catalyst particles were exchanged at 80°C for 1 hour according to a weight ratio of Component B catalyst particles : ammonium salt : H₂O = 1:1:10, filtered, the above exchange and filtration process was repeated once, and dried, wherein the ammonium salt was ammonium chloride, and the obtained Component B catalyst B2 had a sodium oxide content below 0.15 wt%. The properties of the hollow hierarchical-porous ZSM-5 nanocrystal material are shown in Table 2.

Component A catalyst A2 and Component B catalyst B2 were mixed uniformly according to a certain ratio to obtain the composite start-up catalyst D2 of Example 2, the properties of which are shown in Table 3.

### Comparative Example 1

The start-up catalyst used in this Comparative Example 1 was the conventional equilibrium catalyst P1 commonly used in the prior art, the physical property parameters of which are shown in Table 1.

### Comparative Example 2

The start-up catalyst used in this Comparative Example 2 was the conventional equilibrium catalyst P2 commonly used in the prior art, the physical property parameters of which are shown in Table 1.

### Comparative Example 3

The start-up catalyst in this Comparative Example 3 contained only Component A catalyst A1 used in Example 1, and did not contain Component B catalyst. The physical property parameters of Component A catalyst A1 are shown in Table 1.

### Comparative Example 4

The start-up catalyst used in this Comparative Example 4 contained only Component B catalyst used in Example 1, and did not contain Component A catalyst A1. The physical property parameters of Component B catalyst are shown in Table 1.

**Table 1. Catalyst Formulations and Properties of Examples and Comparative Examples**

| | Ex. 1-1 | Ex. 1-2 | Ex. 2 | Comp. Ex. 1 | Comp. Ex. 2 | Comp. Ex. 3 | Comp. Ex. 4 |
|---|---|---|---|---|---|---|---|
| Component A catalyst | A1 | A1 | A2 | P1 | P2 | A1 | |
| Component A catalyst content, wt% | 85 | 55 | 90 | 100 | 100 | 100 | |
| Specific surface area, m²/g | 113 | 113 | 122 | 80 | 90 | 113 | |
| Nickel content, µg/g | 1987 | 1987 | 2341 | 4563 | 7005 | 1987 | |
| Vanadium content, µg/g | 765 | 765 | 851 | 1025 | 2642 | 765 | |
| Rare earth element, µg/g | 5024 | 5024 | 4380 | 25291 | 19729 | 5024 | |
| Particle diameter of 0-20 µm, vol% | 1.1 | 1.1 | 0.9 | 4.6 | 4.0 | 1.1 | |
| Particle diameter of 0-40 µm, vol% | 7.6 | 7.6 | 7.5 | 21.8 | 16.6 | 7.6 | |
| Particle diameter of 0-149 µm, vol% | 96.0 | 96.0 | 95.9 | 97.7 | 95.3 | 96.0 | |
| Average particle diameter, µm | 65.4 | 65.4 | 65.4 | 62.1 | 58.6 | 65.4 | |
| Deep Cracking activity | 60.3 | 60.3 | 58.7 | 79.6 | 80.9 | 60.3 | |
| | | | | | | | |
| Component B catalyst | B1-1 | B1-2 | B2 | | | | B1-1 |
| Component B catalyst content, wt% | 15 | 45 | 10 | 0 | 0 | 0 | 100 |
| Apparent bulk density, g/mL | 0.92 | 0.90 | 0.93 | | | | 0.92 |
| Abrasion index, %/h | 0.85 | 0.87 | 0.72 | | | | 0.85 |
| Particle diameter of 0-20 µm, vol% | 0.8 | 0.7 | 0.9 | | | | 0.8 |
| Particle diameter of 0-40 µm, vol% | 13.4 | 13.7 | 14.0 | | | | 13.4 |
| Particle diameter of 0-149 µm, vol% | 92.9 | 93.4 | 92.7 | | | | 92.9 |
| Average particle diameter, µm | 66.8 | 67.0 | 67.7 | | | | 66.8 |
| Active component and content, wt% | Hollow hierarchical-porous ZSM-5 nanocrystal material 1, 10 wt% | Hollow hierarchical-porous ZSM-5 nanocrystal material 1, 5 wt% | Hollow hierarchical-porous ZSM-5 nanocrystal material 2, 10 wt% | | | | Hollow hierarchical-porous ZSM-5 nanocrystal material 1, 10 wt% |
| Matrix support M and content, wt% | Kaolin, 75 wt% | Kaolin, 75 wt% | Kaolin, 75 wt% | | | | Kaolin, 75 wt% |
| Matrix support N and content, wt% | Pseudo-boehmite, 5 wt% | Pseudo-boehmite, 2 wt% | Pseudo-boehmite, 5 wt% | | | | Pseudo-boehmite, 5 wt% |
| Matrix support P and content, wt% | Alumina sol, 5 wt% | Alumina sol, 3 wt% | Alumina sol, 10 wt% | | | | Alumina sol, 5 wt% |
| Matrix support T and content, wt% | Silica sol, 5 wt% | Silica sol, 5 wt% | Silica sol, 0 wt% | | | | Silica sol, 5 wt% |

**Table 2. Properties of Hollow Hierarchical-porous ZSM-5 Nanocrystal Materials**

| | Hollow hierarchical-porous ZSM-5 nanocrystal material 1 | Hollow hierarchical-porous ZSM-5 nanocrystal material 2 |
|---|---|---|
| Average crystal grain size, µm | 0.7 | 0.6 |
| Ratio of bulk silicon-aluminum molar ratio to surface silicon-aluminum molar ratio | 1.07 | 1.17 |
| Total specific surface area, m²/g | 363 | 358 |
| Mesopore specific surface area, m²/g | 76 | 86 |
| N₂ adsorption-desorption curve | H4 type | H4 type |
| Relative crystallinity, % | 86.5 | 84.2 |

**Table 3. Properties of Composite Start-up Catalysts**

| Composite start-up catalyst | D1-1 | D1-2 | D2 |
|---|---|---|---|
| Apparent bulk density, g/mL | 0.91 | 0.92 | 0.92 |
| Abrasion index, %/h | 0.95 | 0.97 | 1.0 |
| Nickel content, µg/g | 1670 | 1092 | 2104 |
| Vanadium content, µg/g | 650 | 382 | 766 |
| 0-20 µm particle diameter distribution, vol% | 0.6 | 0.56 | 0.6 |
| 0-40 µm particle diameter distribution, vol% | 16.2 | 15.17 | 16.4 |
| 0-149 µm particle diameter distribution, vol% | 95.4 | 94.1 | 95.3 |
| Average particle diameter, µm | 67.6 | 66.4 | 67.7 |

### Performance Testing

The catalysts of the examples and comparative examples were evaluated for their deep cracking reaction performance in an FFB fixed fluidized bed reactor under the following evaluation conditions: reaction temperature 570°C, catalyst-to-oil ratio 10, space velocity 10 h⁻¹, feedstock oil was paraffinic heavy oil, the physical property parameters are shown in Table 4, and the evaluation results are shown in Table 5.

**Table 4. Feedstock Oil Properties**

| Item | Feedstock Oil |
|---|---|
| Density (20 °C) / (kg·m⁻³) | 892.3 |
| Carbon residue, wt% | 4.03 |
| Carbon mass fraction, wt% | 86.8 |
| Hydrogen mass fraction, wt% | 13.12 |
| Metal mass fraction / (µg·g⁻¹) | |
| Fe | 2.1 |
| Ni | 5.4 |
| V | 0.3 |
| Na | 0.4 |
| Ca | 1 |
| Distillation range/°C | |
| 2% | 310 |
| 10% | 371 |
| 50% | 485 |
| Volume fraction distilled at 550°C, % | 87 |

**Table 5. Catalytic Performance Evaluation Results**

| Catalyst Source | Ex. 1-1 | Ex. 1-2 | Ex. 2 | Comp. Ex. 1 | Comp. Ex. 2 | Comp. Ex. 3 | Comp. Ex. 4 |
|---|---|---|---|---|---|---|---|
| Deep Cracking Activity | 61.4 | 64.6 | 59.5 | 79.6 | 80.9 | 60.3 | 90.0 |

| Reaction Performance | | | | | | | |
|---|---|---|---|---|---|---|---|
| Coke Factor | 0.042 | 0.043 | 0.043 | 0.090 | 0.089 | 0.051 | 0.120 |
| Propylene Factor | 0.474 | 0.477 | 0.472 | 0.342 | 0.346 | 0.390 | 0.410 |

Wherein the yields were calculated based on the feedstock input. $Product yield = Product output \left(by weight\right) / Heavy oil feed rate \left(by weight\right) \times 100 %$ $Coke factor = coke yield \left(by weight\right) / conversion rate$ $Propylene factor = propylene yield \left(by weight\right) / LPG yield$

As can be seen from Table 5, the composite start-up catalysts provided by Examples 1-1, 1-2, and 2 had suitable deep cracking activity, a low coke factor, and a high propylene factor. Subsequent start-up tests conducted in industrial units proved that using the composite start-up catalysts provided by Examples 1-1, 1-2, and 2 could efficiently achieve a smooth start-up of the deep catalytic cracking unit in the initial phase of start-up and quickly optimize product distribution. In contrast, using the equilibrium catalysts P1 and P2 of Comparative Examples 1 and 2 and the start-up catalysts of Comparative Examples 3 and 4, due to their excessively high deep cracking activity, excessively high coke factor, and/or excessively low propylene factor, could not achieve a rapid and smooth start-up of the deep catalytic cracking unit in the initial phase of start-up, and were not conducive to quickly optimizing product distribution, prolonging the unit stabilization time.

The following Examples 3-1, 3-2, and 4 and Comparative Examples 3 and 4 were used to illustrate the technical effects and advantages of the second series of composite start-up catalysts according to the first aspect of the present invention.

The equilibrium catalysts P3 and P4 used in Comparative Examples 3 and 4 were conventionally used equilibrium catalysts produced by deep catalytic cracking units, and their properties are shown in Table 6.

Component A catalyst A3 in Examples 3-1 and 3-2 was a treated equilibrium catalyst obtained by subjecting a deep catalytic cracking equilibrium catalyst of deep catalytic cracking process to cyclone treatment and acid demetallization treatment, and its properties are shown in Table 6.

Component A catalyst A4 in Example 4 was a treated equilibrium catalyst obtained by subjecting a deep catalytic cracking equilibrium catalyst of deep catalytic cracking process to cyclone treatment and acid demetallization treatment, and its properties are shown in Table 6.

### Example 3-1

The start-up catalyst used in this example comprised:
(1) Component A catalyst A3:
   An equilibrium catalyst from a deep catalytic cracking unit was subjected to physical cyclone treatment (separating fine components by using a cyclone separator) to achieve a certain particle diameter requirement; and then subjected to chemical demetallization treatment (contacting the deep catalytic cracking equilibrium catalyst with a sulfuric acid solution to react with harmful metals such as vanadium, nickel, iron, and sodium deposited on the equilibrium catalyst, partially removing these harmful metals to reduce their toxicity) to achieve a certain metal content, resulting in Component A catalyst A3, the physical property parameters of which are shown in Table 6.
(2) Component B catalyst B3-1:
   Pseudo-boehmite and water were mixed uniformly, concentrated hydrochloric acid with a concentration of 36 wt% was added with stirring at an acid-to-alumina molar ratio of 0.2 (molar ratio of HCl to pseudo-boehmite calculated as Al₂O₃); the resulting mixture was aged at 70°C for 1.5 hours to obtain an aged pseudo-boehmite slurry. The alumina content of this aged pseudo-boehmite slurry was 12 wt%; ZRP-1 zeolite (product of Sinopec Catalyst Co., Ltd. Qilu Branch, silica-alumina ratio (SiO₂/Al₂O₃ molar ratio) being 25, phosphorus (calculated as P₂O₅) content being 3.5 wt%), alumina sol, silica sol, kaolin, the above aged pseudo-boehmite slurry, and deionized water were mixed uniformly to form a slurry with a solid content of 30 wt%, and spray dried to obtain Component B catalyst microspheres; the Component B catalyst microspheres were calcined at 550°C for 4 hours; the calcined Component B catalyst microspheres were exchanged at 80°C for 1 hour according to a weight ratio of Component B catalyst microspheres : ammonium salt : H₂O = 1:1:10, filtered, the above exchange and filtration process was repeated once, and dried, wherein the ammonium salt was ammonium chloride, yielding Component B catalyst B3-1, which had a sodium oxide content below 0.15 wt%.
(3) Component C catalyst C3:
   Pseudo-boehmite and water were mixed uniformly, concentrated hydrochloric acid with a concentration of 36 wt% was added with stirring at an acid-to-alumina molar ratio of 0.2 (molar ratio of HCl to pseudo-boehmite calculated as Al₂O₃); the resulting mixture was aged at 70°C for 1.5 hours to obtain an aged pseudo-boehmite slurry. The alumina content of this aged pseudo-boehmite slurry was 12 wt%; alumina sol, silica sol, kaolin, the above aged pseudo-boehmite slurry, and deionized water were mixed uniformly to form a slurry with a solid content of 30 wt%, spray dried, and calcined at 550°C for 4 hours; spray-dried microspheres 1 were obtained;
   A magnesium nitrate solution was prepared by dissolving 18.4 g of magnesium nitrate in 50 g of deionized water. The spray-dried microspheres 1 were impregnated with the prepared magnesium nitrate solution at an impregnation temperature of 50°C for 2 hours, directly dried, and calcined to obtain Component C catalyst C3.
(4) Component A catalyst A3, Component B catalyst B3-1, and Component C catalyst C3 were mixed uniformly according to a certain ratio (80:15:5) (the ratios are shown in Table 6) to obtain the composite start-up catalyst D3-1 of Example 1. The properties of the composite start-up catalyst D3-1 are shown in Table 7.

### Example 3-2

In this example:
(1) Component A catalyst A3 was the same as in Example 3-1;
(2) The Component B catalyst B3-2 used was prepared by the same method as Component B catalyst B3-1 in Example 3-1, but the active component content in Component B catalyst B3-2 was different from that in Component B catalyst B3-1 in Example 3-1;
(3) Component B catalyst C3 was the same as in Example 3-1;
(4) Component A catalyst A3, Component B catalyst B3-2, and Component C catalyst C3 were mixed uniformly according to a certain ratio (65:30:5) (the ratios are shown in Table 6) to obtain the composite start-up catalyst D3-2 of Example 1. The properties of the composite start-up catalyst D3-2 are shown in Table 7.

### Example 4

(1) Component A catalyst A4:
   An equilibrium catalyst from a deep catalytic cracking unit was subjected to physical cyclone treatment to achieve a certain particle diameter requirement; and then subjected to chemical demetallization treatment with a sulfuric acid solution to achieve a certain metal content, the physical property parameters are shown in Table 6.
(2) Component B catalyst B4:
   Pseudo-boehmite and water were mixed uniformly, concentrated hydrochloric acid with a concentration of 36 wt% was added with stirring at an acid-to-alumina ratio of 0.2 (weight ratio of HCl to pseudo-boehmite calculated as Al₂O₃); the resulting mixture was aged at 70°C for 1.5 hours to obtain an aged pseudo-boehmite slurry. The alumina content of this aged pseudo-boehmite slurry was 12 wt%; RMPZ zeolite (product of Sinopec Catalyst Co., Ltd. Qilu Branch, phosphorus content (calculated as P₂O₅) being 3.4 wt%, Fe₂O₃ content being 2.3 wt%, silica-alumina ratio being 25, mesopore volume being 0.12 cm³/g;), alumina sol, silica sol, kaolin, the above aged pseudo-boehmite slurry, and deionized water were mixed uniformly to form a slurry with a solid content of 30 wt%, and spray dried to obtain Component B catalyst microspheres; the Component B catalyst microspheres were calcined at 550°C for 4 hours; the calcined Component B catalyst microspheres were exchanged at 80°C for 1 hour according to a weight ratio of Component B catalyst microspheres : ammonium salt : H₂O = 1:1:10, filtered, the above exchange and filtration process was repeated once, and dried, wherein the ammonium salt was ammonium chloride, yielding Component B catalyst B4, which had a sodium oxide content below 0.15 wt%.
(3) Component C catalyst C4:
   Pseudo-boehmite and water were mixed uniformly, concentrated hydrochloric acid with a concentration of 36 wt% was added with stirring at an acid-to-alumina molar ratio of 0.2 (molar ratio of HCl to pseudo-boehmite calculated as Al₂O₃); the resulting mixture was aged at 70°C for 1.5 hours to obtain an aged pseudo-boehmite slurry. The alumina content of this aged pseudo-boehmite slurry was 12 wt%; a barium nitrate solution (10.2 g of barium nitrate dissolved in 50 g of deionized water), alumina sol, silica sol, kaolin, the above aged pseudo-boehmite slurry, and deionized water were mixed uniformly to form a slurry with a solid content of 30 wt%, spray dried, and calcined at 550°C for 4 hours to obtain Component C catalyst C4.
(4) Component A catalyst A4, Component B catalyst B4, and Component C catalyst C4 were mixed uniformly according to a certain ratio (85:10:5 by weight) to obtain the composite start-up catalyst D4 of Example 4. The properties of the composite start-up catalyst D4 are shown in Table 7.

### Comparative Example 3

The catalyst in Comparative Example 3 was the conventional equilibrium catalyst P1, the same as the equilibrium catalyst used in Comparative Example 1, and the physical property parameters of P1 are shown in Table 6.

### Comparative Example 4

The catalyst in Comparative Example 4 was the conventional equilibrium catalyst P2, the same as the equilibrium catalyst used in Comparative Example 2, and the physical property parameters of P2 are shown in Table 6.

**Table 6. Catalyst Formulations and Properties of Examples and Comparative Examples**

| | Ex. 3-1 | Ex. 3-2 | Ex. 4 | Comp. Ex. 3 | Comp. Ex. 4 |
|---|---|---|---|---|---|
| Component A catalyst | Component A catalyst 3 | Component A catalyst 3 | Component A catalyst 4 | Equilibrium catalyst P1 | Equilibrium catalyst P2 |
| Content, wt% | 80 | 65 | 85 | 100 | 100 |
| Specific surface area, m²/g | 113 | 113 | 122 | 80 | 90 |
| Nickel content, µg/g | 1987 | 1987 | 2341 | 4563 | 7005 |
| Vanadium content, µg/g | 765 | 765 | 851 | 1025 | 2642 |
| Rare earth element, µg/g | 5024 | 5024 | 4380 | 25291 | 19729 |
| 0-20 µm particle diameter distrib., vol% | 1.1 | 1.1 | 0.9 | 4.6 | 4.0 |
| 0-40 µm particle diameter distrib., vol% | 7.6 | 7.6 | 7.5 | 21.8 | 16.6 |
| 0-149 µm particle diameter distrib., vol% | 96.0 | 96.0 | 95.9 | 97.7 | 95.3 |
| Average particle diameter, µm | 65.4 | 65.4 | 65.4 | 62.1 | 58.6 |
| Deep cracking activity | 60.3 | 60.3 | 58.7 | 79.6 | 80.9 |
| Component B catalyst | B1 | B1 | B2 | | |
| Content, wt% | 15 | 30 | 10 | 0 | 0 |
| Apparent bulk density, g/mL | 0.91 | 0.91 | 0.92 | | |
| Abrasion index, %/h | 0.78 | 0.78 | 0.91 | | |
| 0-20 µm particle diameter distrib., vol% | 0.75 | 0.75 | 0.83 | | |
| 0-40 µm particle diameter distrib., vol% | 12.1 | 12.1 | 13.0 | | |
| 0-149 µm particle diameter distrib., vol% | 93.4 | 93.4 | 95.1 | | |
| Average particle diameter, µm | 66.9 | 66.9 | 67.2 | | |
| Active component | ZRP-1 | ZRP-1 | RMPZ | | |
| Active component content, wt% | 10 | 5 | 10 | | |
| Matrix support M and content (wt%) | Kaolin, 75 | Kaolin, 75 | Kaolin, 75 | | |
| Matrix support N and content (wt%) | Pseudo-boehmite, 5 | Pseudo-boehmite, 2 | Pseudo-boehmite, 5 | | |
| Matrix support P and content (wt%) | Alumina sol, 5 | Alumina sol, 3 | Alumina sol, 5 | | |
| Matrix support T and content (wt%) | Silica sol, 5 | Silica sol, 5 | Silica sol, 5 | | |
| Component C catalyst | C1 | C1 | C2 | | |
| Content, wt% | 5 | 5 | 5 | 0 | 0 |
| Metal oxide type | Magnesium oxide | Magnesium oxide | Barium oxide | | |
| Metal oxide loading, wt% | 5.0 | 5.0 | 5.0 | | |
| Matrix support M and content, wt% | Kaolin, 80 | Kaolin, 80 | Kaolin, 80 | | |
| Matrix support N and content, wt% | Pseudo-boehmite, 5 | Pseudo-boehmite, 5 | Pseudo-boehmite, 5 | | |
| Matrix support P and content, wt% | Alumina sol, 5 | Alumina sol, 5 | Alumina sol, 5 | | |
| Matrix support T and content, wt% | Silica sol, 5 | Silica sol, 5 | Silica sol, 5 | | |

**Table 7. Properties of Composite Start-up Catalysts**

| Composite start-up catalyst properties | D3-1 | D3-2 | D4 |
|---|---|---|---|
| Apparent bulk density, g/mL | 0.92 | 0.92 | 0.91 |
| Abrasion index, %/h | 0.90 | 0.86 | 0.91 |
| Nickel content, µg/g | 1590 | 1291 | 1872 |
| Vanadium content, µg/g | 612 | 497 | 680 |
| 0-20 µm particle diameter distrib., vol% | 0.98 | 0.90 | 0.83 |
| 0-40 µm particle diameter distrib., vol% | 8.4 | 8.8 | 15.7 |
| 0-149 µm particle diameter distrib., vol% | 95.2 | 94.6 | 94.0 |
| Average particle diameter, µm | 68.5 | 68.9 | 66.9 |

### Performance Testing

The composite start-up catalysts prepared in the examples and comparative examples were evaluated for their deep cracking reaction performance in an FFB fixed fluidized bed reactor under the following evaluation conditions: reaction temperature of 570°C, catalyst-to-oil weight ratio of 10:1, weight hourly space velocity of 10 h⁻¹, feedstock was heavy oil. The physical property parameters are shown in Table 8, and the evaluation results are shown in Table 9.

**Table 8. Heavy Oil Properties**

| Item | Heavy Oil |
|---|---|
| Density (20°C) / (kg·m⁻³) | 923.1 |
| Kinematic viscosity / (mm²·s⁻¹) | |
| 80°C | 20.57 |
| 100°C | 12.18 |
| Carbon residue mass fraction/% | 2.92 |
| Elemental mass composition/% | |
| C | 87.16 |
| H | 12.56 |
| S | 0.164 |
| N | 0.15 |
| Paraffin content, wt% | 19.5 |
| Total naphthene content, wt% | 31.4 |
| Total aromatics content, wt% | 45.1 |
| Gum content, wt% | 4.0 |
| Distillation range/°C | |
| 10% | 333 |
| 30% | 402 |
| 50% | 452 |
| 70% | 513 |
| 90% | 631 |
| 90% | 631 |

**Table 9. Catalytic Performance Evaluation Results of Start-up Catalysts**

| Catalyst Source | Ex. 3-1 | Ex. 3-2 | Ex. 4 | Comp. Ex. 3 | Comp. Ex. 4 |
|---|---|---|---|---|---|
| Deep cracking Activity | 61.4 | 63.0 | 59.5 | 79.6 | 80.9 |

| Reaction Performance | | | | | |
|---|---|---|---|---|---|
| Coke Factor | 0.042 | 0.046 | 0.043 | 0.090 | 0.089 |
| Propylene Factor | 0.474 | 0.481 | 0.470 | 0.342 | 0.346 |

Wherein the yields mentioned were calculated based on the feedstock input. $Product yield = Product output \left(by weight\right) / Heavy oil feed rate \left(by weight\right)$ $Coke factor = coke yield \left(by weight\right) / conversion rate$ $Propylene factor = propylene yield \left(by weight\right) / LPG yield .$

As can be seen from Table 9, the composite start-up catalysts provided by the present invention had a significantly higher propylene factor and a significantly lower coke factor. Subsequent start-up tests conducted in industrial deep catalytic cracking units proved that the composite start-up catalysts of Examples 3-1, 3-2, and 4 could efficiently achieve a rapid and smooth start-up of the deep catalytic cracking unit in the initial phase of start-up and quickly optimize product distribution. In contrast, using the equilibrium catalysts P1 and P2 of Comparative Examples 3 and 4, due to their excessively high deep cracking activity, excessively high coke factor, and excessively low propylene factor, could not achieve a rapid and smooth start-up of the deep catalytic cracking unit in the initial phase of start-up, and could not quickly optimize product distribution, prolonging the unit stabilization time.

The following Examples 5 and 6 and Comparative Example 5 are used to illustrate the technical effects of the third series of composite start up catalyst according to the above first aspect.

In these examples, the raw materials used included:
Component A catalysts 1 and 2 used in Examples 5 and 6 were equilibrium catalysts produced by catalytic cracking units, and their properties are shown in Table 10.

Modified small crystal grain Y-type zeolite 1: its average crystal grain size was 500 nm, its Source was: Sinopec Catalyst Co., Ltd. Qilu Branch, silica-alumina ratio (SiO₂/Al₂O₃ molar ratio) was 5.2, the modifying element was lanthanum and its content was 12 wt%.

The properties of the modified small crystal grain Y-type zeolite materials used in the examples and comparative examples are shown in Table 11.

### Example 5

(1) Component A catalyst 1:
   Its physical property parameters are shown in Table 10. It was obtained by the following method: subjecting an equilibrium catalyst from a catalytic cracking FCC unit to physical cyclone treatment (separating fine components from the spent catalyst by using a cyclone separator) to achieve a certain particle diameter requirement; and then subjected to chemical demetallization treatment (contacting the equilibrium catalyst with a sulfuric acid solution to react with harmful metals such as vanadium, nickel, iron, and sodium deposited on the equilibrium catalyst, partially removing these harmful metals to reduce their toxicity) to achieve a certain metal content.
(2) Component B catalyst:
   Pseudo-boehmite and water were mixed uniformly, concentrated hydrochloric acid with a concentration of 36 wt% was added with stirring at an acid-to-alumina ratio of 0.2 (molar ratio of HCl to pseudo-boehmite calculated as Al₂O₃); the resulting mixture was aged at 70°C for 1.5 hours to obtain an aged pseudo-boehmite slurry; the alumina content of this aged pseudo-boehmite slurry was 12 wt%. The modified small crystal grain Y-type zeolite material 1 (its properties are shown in Table 11, product of Sinopec Catalyst Co., Ltd. Qilu Branch), alumina sol, silica sol, kaolin, the above aged pseudo-boehmite slurry, and deionized water were mixed uniformly to form a slurry with a solid content of 30 wt%, and spray dried to obtain Component B catalyst microspheres; the Component B catalyst microspheres were calcined at 550°C for 4h; the calcined Component B catalyst microspheres were exchanged at 80°C for 1h according to a weight ratio of Component B catalyst microspheres : ammonium salt : H₂O = 1:1:10, filtered, the above exchange and filtration process was repeated once, and dried, wherein the ammonium salt was ammonium chloride, and the obtained Component B catalyst 1 had a sodium oxide content below 0.15 wt%.
(3) Component A catalyst and Component B catalyst 1 were mixed uniformly according to the ratios listed in Table 10 to obtain the start-up catalyst D5 of Example 5, the properties of which are shown in Table 12.

### Example 6

(1) The physical property parameters of Component A catalyst 2 are shown in Table 10. It was obtained from an equilibrium catalyst from a catalytic cracking unit (different from the FCC equilibrium catalyst of Example 5), which was subjected to cyclone treatment to achieve a certain particle diameter; and then subjected to chemical demetallization treatment to achieve a certain metal content.
(2) Component B catalyst:
   Pseudo-boehmite and water were mixed uniformly, concentrated hydrochloric acid with a concentration of 36 wt% was added with stirring at an acid-to-alumina ratio of 0.2 (molar ratio of HCl to pseudo-boehmite calculated as Al₂O₃); the resulting mixture was aged at 70°C for 1.5 hours to obtain an aged pseudo-boehmite slurry; the alumina content of this aged pseudo-boehmite slurry was 12 wt%. The modified small crystal grain Y-type zeolite material 2 (properties are shown in Table 11, product of Sinopec Catalyst Co., Ltd. Qilu Branch), alumina sol, kaolin, the above aged pseudo-boehmite slurry, and deionized water were mixed uniformly to form a slurry with a solid content of 30 wt%, and spray dried to obtain Component B catalyst microspheres; the Component B catalyst microspheres were calcined at 550°C for 4 h; the calcined catalyst microspheres were exchanged at 80°C for 1 h according to a weight ratio of Component B catalyst microspheres : ammonium salt : H₂O = 1:1:10, filtered, the above exchange and filtration process was repeated once, and dried, wherein the ammonium salt was ammonium chloride, and the obtained Component B catalyst 2 had a sodium oxide content below 0.15 wt%.
(3) Component A catalyst 2 and Component B catalyst 2 were mixed uniformly according to the ratios listed in Table 10 to obtain the start-up catalyst D6 of Example 6, the properties of which are shown in Table 12.

### Comparative Example 5

The start-up catalyst used in Comparative Example 5 contained only the conventionally used equilibrium catalyst 5 produced by a catalytic cracking unit, the physical property parameters of which are shown in Table 10.

### Comparative Example 6

The start-up catalyst used in Comparative Example 6 contained only Component A catalyst 1 from Example 5, and did not contain Component B catalyst. The physical property parameters of Component A catalyst 1 are shown in Table 10.

**Table 10. Formulations and Properties of Catalysts of Examples and Comparative Examples**

| | Ex. 5 | Ex. 6 | Comp. Ex. 5 | Comp. Ex. 6 |
|---|---|---|---|---|
| **Component A catalyst** | **Component A catalyst 1** | **Component A catalyst 2** | **Equilibrium catalyst 5** | **Component A catalyst 1** |
| Content, wt% | 80 | 90 | 100 | 100 |
| Specific surface area, m²/g | 132 | 122 | 88 | 132 |
| Nickel content, µg/g | 2491 | 3667 | 7579 | 2491 |
| Vanadium content, µg/g | 2345 | 1770 | 4143 | 2345 |
| Iron content, µg/g | 3780 | 3450 | 6622 | 3780 |
| Rare earth element, µg/g | 21500 | 23500 | 18400 | 21500 |
| 0-20 µm particle diameter distrib., vol% | 0.7 | 1.0 | 5.7 | 0.7 |
| 0-40 µm particle diameter distrib., vol% | 15.6 | 16.8 | 22.4 | 15.6 |
| 0-149 µm particle diameter distrib., vol% | 91.5 | 93.5 | 92.7 | 91.5 |
| Average particle diameter, µm | 68.7 | 71.2 | 67.9 | 68.7 |
| Cracking activity | 62 | 63 | 53 | 62 |

| **Component B catalyst** | **Component** | **Component** | | |
|---|---|---|---|---|
| | Ex. 5 | Ex. 6 | Comp. Ex. 5 | Comp. Ex. 6 |
| **number** | **B catalyst 1** | **B catalyst 2** | | |
| Content, wt% | 10 | 20 | 0 | 0 |
| Apparent bulk density, g/mL | 0.86 | 0.89 | | |
| Abrasion index, %/h | 1.5 | 1.6 | | |
| 0-20 µm particle diameter distrib., vol% | 0.4 | 0.7 | | |
| 0-40 µm particle diameter distrib., vol% | 14.7 | 13.5 | | |
| 0-149 µm particle diameter distrib., vol% | 91.4 | 93.3 | | |
| Average particle diameter, µm | 67.5 | 68.1 | | |
| Active component | Modified small crystal grain Y-type zeolite material 1 | Modified small crystal grain Y-type zeolite material 2 | | |
| Active component content, wt% | 10 | 15 | | |
| Matrix support M | Kaolin | Kaolin | | |
| Matrix support M content, wt% | 75 | 75 | | |
| Matrix support N | Pseudo-boehmite | Pseudo-boehmite | | |
| Matrix support N content, | 5 | 5 | | |

| | Ex. 5 | Ex. 6 | Comp. Ex. 5 | Comp. Ex. 6 |
|---|---|---|---|---|
| wt% | | | | |
| Matrix support P | Alumina sol | Alumina sol | | |
| Matrix support P content, wt% | 5 | 10 | | |
| Matrix support T | Silica sol | Silica sol | | |
| Matrix support T content, wt% | 5 | 0 | | |

**Table 11**

| Modified small crystal grain Y-type zeolite material | Modified small crystal grain Y-type zeolite material 1 | Modified small crystal grain Y-type zeolite material 2 |
|---|---|---|
| RE₂O₃ content, % | 12.0 | 12.0 |
| Cell constant, nm | 2.455 | 2.458 |
| Content proportion of non-framework Al to total Al, % | 20.50 | 22.74 |
| Ratio of B acid amount to L acid amount | 3.0 | 2.8 |
| External surface acid amount, µmol/g | 230 | 210 |
| Average crystal grain size, nm | 600 | 650 |
| Total specific surface area, m²/g | 630 | 620 |
| Relative crystallinity, % | 56 | 55 |
| Lattice collapse temperature, °C | 1047 | 1044 |

**Table 12**

| Start-up catalyst number | D5 | D6 |
|---|---|---|
| Apparent bulk density, g/mL | 0.90 | 0.91 |
| Abrasion index, %/h | 1.6 | 1.7 |
| Nickel content, µg/g | 2200 | 2930 |
| Vanadium content, µg/g | 2110 | 1410 |
| Iron content, µg/g | 3398 | 2750 |
| Rare earth content, µg/g | 19300 | 18750 |
| 0-20 µm particle diameter distrib., vol% | 0.6 | 0.8 |
| 0-40 µm particle diameter distrib., vol% | 15.4 | 15.6 |
| 0-149 µm particle diameter distrib., vol% | 91.5 | 93.4 |
| Average particle diameter, µm | 68.5 | 70.9 |

### Performance Testing

The catalysts of Examples 5 and 6 and Comparative Example 5 were evaluated for their cracking reaction performance in an FFB fixed fluidized bed reactor under the following evaluation conditions: reaction temperature 520°C, catalyst-to-oil weight ratio 10:1, space velocity 10 h⁻¹, feedstock was intermediate base heavy oil. The physical property parameters are shown in Table 13, and the catalytic performance evaluation results of the start-up catalysts are shown in Table 14.

**Table 13. Feedstock Oil Properties**

| Item | Intermediate Base Heavy Oil |
|---|---|
| Density (20 °C) / (kg·m⁻³) | 904.7 |
| Carbon residue, wt% | 4.50 |
| Carbon mass fraction, wt% | 88.7 |
| Hydrogen mass fraction, wt% | 11.3 |
| Hydrocarbon composition, % | |
| Saturated hydrocarbons | 47.1 |
| Aromatics | 22.3 |
| Gums | 30.6 |
| Asphaltenes | <0.1 |

**Table 14. Catalytic Performance Evaluation Results of Start-up Catalysts**

| Start-up catalyst source | Ex. 5 | Ex. 6 | Comp. Ex. 5 | Comp. Ex. 6 |
|---|---|---|---|---|
| Cracking Activity | 64.8 | 63.2 | 53.0 | 62 |
| Reaction Performance | | | | |
| Coke Factor | 0.121 | 0.124 | 0.162 | 0.137 |
| Gasoline Factor | 0.455 | 0.451 | 0.413 | 0.436 |

Wherein the yields mentioned were calculated based on the feedstock input. $Product yield = Product output \left(by weight\right) / Heavy oil feed rate \left(by weight\right) \times 100 %$ $Coke factor = coke yield \left(by weight\right) / conversion rate$ $Gasoline factor = gasoline yield \left(by weight\right) / conversion rate .$

As can be seen from Table 14, the start-up catalysts provided by the present invention had suitable cracking activity, a low coke factor, and a high gasoline factor. Subsequent start-up tests conducted in industrial catalytic cracking units proved that using the start-up catalysts of Examples 5 and 6 mentioned above could efficiently achieve a smooth start-up of the catalytic cracking unit in the initial phase of start-up and quickly optimize product distribution. In contrast, using the catalysts of Comparative Examples 5 and 6 prolonged the unit stabilization time.

The following Examples 7 and 8 and Comparative Examples 7 and 8 were used to illustrate the technical effects of the fourth series of technical solution of according to the above first aspect.

### Example 7

(1) Component A catalyst was equilibrium catalyst 7 (or spent catalyst) from a catalytic cracking unit. This equilibrium catalyst was subjected to physical cyclone treatment to achieve a certain particle diameter requirement; and then subjected to chemical demetallization treatment to achieve a certain metal content, the physical property parameters are shown in Table 15.
(2) Component B catalyst:
   Pseudo-boehmite and water were mixed uniformly, concentrated hydrochloric acid with a concentration of 36 wt% was added with stirring at an acid-to-alumina ratio of 0.2 (weight ratio of 36 wt% hydrochloric acid to pseudo-boehmite calculated as Al₂O₃); the resulting mixture was aged at 70°C for 1.5 hours to obtain an aged pseudo-boehmite slurry. The alumina content of this aged pseudo-boehmite slurry was 12 wt%; modified small crystal grain Y-type zeolite 1 (average crystal grain size being 500 nm, Source: Sinopec Catalyst Co., Ltd. Qilu Branch, silica-alumina ratio (SiO₂/Al₂O₃ molar ratio) being 5.2, modifying element being lanthanum, content being 12 wt%, same below), ZRP-1 zeolite (P₂O₅ content being 6.0 wt%, silica-alumina ratio (SiO₂/Al₂O₃ molar ratio) being 25, Sinopec Catalyst Co., Ltd. Qilu Branch), alumina sol, silica sol, kaolin, the above aged pseudo-boehmite slurry, and deionized water were mixed uniformly to form a slurry with a solid content of 30 wt%, and spray dried to obtain Component B catalyst microspheres; the Component B catalyst microspheres were calcined at 550°C for 4 h; the calcined Component B catalyst microspheres were exchanged at 80°C for 1 h according to a weight ratio of Component B catalyst : ammonium salt : H₂O = 1:1:10, filtered, the above exchange and filtration process was repeated once, and dried, wherein the ammonium salt was ammonium chloride, and the obtained Component B catalyst had a sodium oxide content below 0.15 wt%.
(3) Component C catalyst:
   Pseudo-boehmite and water were mixed uniformly, concentrated hydrochloric acid with a concentration of 36 wt% was added with stirring at an acid-to-alumina ratio of 0.2 (weight ratio of 36 wt% concentrated hydrochloric acid to pseudo-boehmite calculated as Al₂O₃); the resulting mixture was aged at 70°C for 1.5 hours to obtain an aged pseudo-boehmite slurry. The alumina content of this aged pseudo-boehmite slurry was 12 wt%; alumina sol, silica sol, kaolin, the above aged pseudo-boehmite slurry, and deionized water were mixed uniformly to form a slurry with a solid content of 30 wt%, spray dried, and calcined at 550°C for 4 h;
   A magnesium nitrate solution was prepared by dissolving 18.4 g of magnesium nitrate in 50 g of deionized water. The spray-dried microspheres were impregnated with the prepared magnesium nitrate solution at an impregnation temperature of 50°C for 2 hours, directly dried, and calcined to obtain Component C catalyst.
(4) Component A catalyst, Component B catalyst, and Component C catalyst were mixed uniformly according to the ratios listed in Table 15 to obtain catalyst D7 of Example 7. The properties of the obtained catalyst D7 are shown in Table 16.

### Example 8

(1) Component A catalyst was equilibrium catalyst 8 from a catalytic cracking unit. This equilibrium catalyst was subjected to physical cyclone treatment to achieve a certain particle diameter requirement; and then subjected to chemical demetallization treatment to achieve a certain metal content. The physical property parameters are shown in Table 15.
(2) Component B catalyst:
   Pseudo-boehmite and water were mixed uniformly, concentrated hydrochloric acid with a concentration of 36 wt% was added with stirring at an acid-to-alumina ratio of 0.2 (weight ratio of 36 wt% concentrated hydrochloric acid to pseudo-boehmite calculated as Al₂O₃); the resulting mixture was aged at 70°C for 1.5 hours to obtain an aged pseudo-boehmite slurry. The alumina content of this aged pseudo-boehmite slurry was 12 wt%; modified small crystal grain Y-type zeolite 1 (average crystal grain size being 500 nm, Source: Sinopec Catalyst Co., Ltd. Qilu Branch, silica-alumina ratio (SiO₂/Al₂O₃ molar ratio) being 5.2, modifying element being lanthanum and its content being 12 wt%), RMPZ zeolite (rare earth content calculated as RE₂O₃ being 2.5 wt%, P₂O₅ content being 6.0 wt%, silica-alumina ratio (SiO₂/Al₂O₃ molar ratio) being 25, pore distribution showing a most probable pore diameter at 10 nm), alumina sol, silica sol, kaolin, the above aged pseudo-boehmite slurry, and deionized water were mixed uniformly to form a slurry with a solid content of 30 wt%, and spray dried to obtain Component B catalyst; the Component B catalyst microspheres were calcined at 550°C for 4 h; the calcined catalyst microspheres were exchanged at 80°C for 1 h according to a weight ratio of Component B catalyst : ammonium salt : H₂O = 1:1:10, filtered, the above exchange and filtration process was repeated once, and dried, wherein the ammonium salt was ammonium chloride, and the obtained Component B catalyst had a sodium oxide content below 0.15 wt%.
(3) Component C catalyst:
   Pseudo-boehmite and water were mixed uniformly, concentrated hydrochloric acid with a concentration of 36 wt% was added with stirring at an acid-to-alumina ratio of 0.2 (weight ratio of hydrochloric acid with concentration of 36 wt% to pseudo-boehmite calculated as Al₂O₃); the resulting mixture was aged at 70°C for 1.5 hours to obtain an aged pseudo-boehmite slurry. The alumina content of this aged pseudo-boehmite slurry was 12 wt%; a barium nitrate solution (10.2 g of barium nitrate being dissolved in 50 g of deionized water), alumina sol, silica sol, kaolin, the above aged pseudo-boehmite slurry, and deionized water were mixed uniformly to form a slurry with a solid content of 30 wt%, spray dried, and calcined at 550°C for 4 h to obtain Component C catalyst.
(4) Component A catalyst, Component B catalyst, and Component C catalyst were mixed uniformly according to the ratios listed in Table 15 to obtain catalyst D8 of Example 8. The properties of the obtained catalyst D8 are shown in Table 16.

### Comparative Example 7

The start-up catalyst used in Comparative Example 7 contained only Component A catalyst, namely the conventionally used equilibrium catalyst 9 from a catalytic cracking unit, the physical property parameters of which are shown in Table 15.

### Comparative Example 8

The start-up catalyst used in Comparative Example 8 contained only Component A catalyst used in Example 7 (i.e., equilibrium catalyst 7), and did not contain Component B catalyst and Component C catalyst components. The physical property parameters of the catalyst in Comparative Example 8 are shown in Table 15.

**Table 15. Component Parameters of Examples and Comparative Examples**

| | Ex. 7 | Ex. 8 | Comp. Ex. 7 | Comp. Ex. 8 |
|---|---|---|---|---|
| **Component A catalyst** | Equilibrium catalyst 7 | Equilibrium catalyst 8 | Equilibrium catalyst 9 | Equilibrium catalyst 7 |
| Content in start-up catalyst, wt% | 80 | 85 | 100 | 100 |
| Specific surface area, m²/g | 103 | 102 | 81 | 103 |
| Nickel content, µg/g | 2491 | 3667 | 11560 | 2491 |
| Vanadium content, µg/g | 2345 | 2044 | 500 | 2345 |
| Iron content, µg/g | 4059 | 4574 | 6750 | 4059 |
| Sodium content, µg/g | 740 | 700 | 985 | 740 |
| Calcium content, µg/g | 730 | 850 | 1000 | 730 |
| Y-type zeolite crystallinity, % | 26.7 | 25.7 | 15.4 | 26.7 |
| ZSM-5 zeolite crystallinity, % | 4.5 | 3.8 | 0.0 | 4.5 |
| Particle diameter distrib. 0-20 µm, % | 0.9 | 0.8 | 5.7 | 0.9 |
| Particle diameter distrib. 0-40 µm, % | 7.3 | 8.5 | 23.8 | 7.3 |
| Particle diameter distrib. 0-149 µm, % | 96.7 | 94.9 | 93.7 | 96.7 |
| Average particle diameter, µm | 66.4 | 67.4 | 66.1 | 66.4 |
| Cracking activity | 58.3 | 58.7 | 51 | 58.3 |
| **Component B catalyst** | | | | |
| Content in start-up catalyst, wt% | 15 | 10 | 0 | 0 |
| Apparent bulk density, g/mL | 0.91 | 0.92 | | |
| Abrasion index, %/h | 0.78 | 0.91 | | |
| Particle diameter distrib. 0-20 µm, % | 0.75 | 0.83 | | |
| Particle diameter distrib. 0-40 µm, % | 12.1 | 13.0 | | |
| Particle diameter distrib. 0-149 µm, % | 93.4 | 95.1 | | |
| Average particle diameter, µm | 66.9 | 67.2 | | |
| Active component 1 | Modified small crystal grain Y-type zeolite 1 | Modified small crystal grain Y-type zeolite 1 | | |
| Active component 1 content, wt% | 7 | 7 | | |
| Active component 2 | ZRP-1 | RMPZ | | |
| Active component 2 content, wt% | 3 | 3 | | |
| Matrix M | Kaolin | Kaolin | | |
| Matrix M content, wt% | 75 | 75 | | |
| Matrix N | Pseudo-boehmite | Pseudo-boehmite | | |
| Matrix N content, wt% | 5 | 5 | | |
| Matrix P | Alumina sol | Alumina sol | | |
| Matrix P content, wt% | 5 | 5 | | |
| Matrix T | Silica sol | Silica sol | | |
| Matrix T content, wt% | 5 | 5 | | |
| **Component C catalyst** | | | | |
| Content in start-up catalyst, wt% | 5 | 5 | 0 | 0 |
| Metal oxide type | Magnesium oxide | Barium oxide | | |
| Content, wt% | 5.0 | 5.0 | | |
| Matrix M | Kaolin | Kaolin | | |
| Matrix M content, wt% | 80 | 80 | | |
| Matrix N | Pseudo-boehmite | Pseudo-boehmite | | |
| Matrix N content, wt% | 5 | 5 | | |
| Matrix P | Alumina sol | Alumina sol | | |
| Matrix P content, wt% | 5 | 5 | | |
| Matrix T | Silica sol | Silica sol | | |
| Matrix T content, wt% | 5 | 5 | | |

**Table 16. Properties of Start-up Catalysts**

| **Start-up catalyst** | D7 | D8 |
|---|---|---|
| Apparent bulk density, g/mL | 0.90 | 0.90 |
| Abrasion index, %/h | 1.0 | 1.1 |
| Nickel content, µg/g | 2000 | 3100 |
| Vanadium content, µg/g | 1800 | 1700 |
| Iron content, µg/g | 3200 | 3850 |
| Sodium content, µg/g | 580 | 570 |
| Calcium content, µg/g | 570 | 710 |
| Particle diameter 0-20 µm, vol% | 0.82 | 0.86 |
| Particle diameter 0-40 µm, vol% | 8.7 | 9.1 |
| Particle diameter 0-149 µm, vol% | 95.6 | 94.5 |
| Average particle diameter, µm | 66.3 | 67.5 |

In Component B catalyst and Component C catalyst, the content of small crystal grain Y-type zeolite 1 was on a dry basis, the ZSM-5 zeolite content was on a dry basis, pseudo-boehmite was calculated as Al₂O₃, alumina sol was calculated as Al₂O₃, silica sol was calculated as SiO₂, kaolin was on a dry basis, and alkaline earth metals were calculated as oxides.

### Performance Testing

The catalytic cracking start-up catalysts prepared in the examples and comparative examples were evaluated for their cracking reaction performance in a fixed fluidized bed reactor under the following evaluation conditions: reaction temperature of 520°C, catalyst-to-oil ratio of 10, space velocity of 10 h⁻¹, feedstock was hydrogenated heavy oil, its physical property parameters being shown in Table 17. The evaluation results of the catalytic performance of the start-up catalysts are shown in Table 18.

**Table 17. Properties of Hydrogenated Heavy Oil**

| Item | Hydrogenated Heavy Oil |
|---|---|
| Density (20°C) / (kg·m⁻³) | 934.0 |
| Kinematic viscosity (80°C) / (mm²·s⁻¹) | 37.2 |
| Carbon residue mass fraction/% | 5.57 |
| Carbon content, % | 87.29 |
| Hydrogen content, % | 12.05 |
| Hydrocarbon composition, % | |
| Saturated hydrocarbon | 52.5 |
| Aromatics | 34.5 |
| Gums | 11.4 |
| Asphaltenes | 1.6 |
| Distillation range, °C | |
| 5% | 355 |
| 50% | 535 |
| 95% | 955 |
| Final boiling point | 1190 |

**Table 18. Catalytic Performance Evaluation Results of Start-up Catalysts**

| | Ex. 7 | Ex. 8 | Comp. Ex. 7 | Comp. Ex. 8 |
|---|---|---|---|---|
| Cracking Activity | 60.3 | 60.7 | 51.0 | 58.3 |
| Reaction Performance | | | | |
| Coke Factor | 0.114 | 0.118 | 0.147 | 0.129 |
| Gasoline Factor | 0.467 | 0.463 | 0.415 | 0.442 |
| Propylene Factor | 0.450 | 0.446 | 0.398 | 0.424 |

Wherein the yields mentioned were calculated based on the feedstock input. $Product yield = Product output \left(by weight\right) / Heavy oil feed rate \left(by weight\right) \times 100 %$ $Coke factor = coke yield \left(by weight\right) / conversion rate$ $Gasoline factor = gasoline yield \left(by weight\right) / conversion rate$ $Propylene factor = propylene yield \left(by weight\right) / LPG yield$

As can be seen from Table 18, the start-up catalysts provided by the present invention had higher gasoline and propylene factors, achieving the technical goal of maximizing gasoline and propylene production. Furthermore, subsequent start-up tests conducted in industrial catalytic cracking units proved that using the start-up catalysts of Examples 7 and 8 mentioned above could efficiently achieve a smooth start-up of the catalytic cracking unit in the initial phase of start-up and quickly optimize product distribution. In contrast, using the catalysts of Comparative Examples 5 and 6 prolonged the unit stabilization time.

Exemplary embodiments of the present invention have been described in detail above, but the present invention is not limited thereto. Within the technical concept of the present invention, various simple modifications can be made to the technical solutions of the present invention, including combining various technical features in any other suitable manner. These simple modifications and combinations should also be regarded as the content disclosed in the present invention and fall within the protection scope of the present invention.

## Claims

1. A composite start-up catalyst, particularly a start-up catalyst for a deep catalytic cracking unit or a catalytic cracking unit, **characterized in that**, based on the dry basis weight of the composite start-up catalyst, the composite start-up catalyst comprises 15-95 wt% of Component A catalyst, which is selected from an equilibrium catalyst, and 5-85 wt% of Component B catalyst, which is selected from one or more fresh catalysts, preferably a fresh deep catalytic cracking catalyst or a fresh catalytic cracking catalyst, and optionally Component C catalyst; wherein the equilibrium catalyst is preferably a deep catalytic cracking or catalytic cracking equilibrium catalyst and/or a deep catalytic cracking or catalytic cracking equilibrium catalyst after treatment, the treatment includes demetallization treatment and/or particle diameter adjustment treatment, preferably, the deep catalytic cracking or catalytic cracking equilibrium catalyst has a deep cracking activity or cracking activity of 55-65; the Component C catalyst contains 2-10 wt% of an oxide of a modifying metal.

2. The composite start-up catalyst according to claim 1, particularly a start-up catalyst for a deep catalytic cracking unit, **characterized in that**, based on the dry basis weight of the composite start-up catalyst, the composite start-up catalyst comprises:
(1) 15-95 wt%, preferably 50-85 wt% of Component A catalyst, and
(2) 5-85 wt%, preferably 15-50 wt% of Component B catalyst,
wherein, Component A catalyst is a deep catalytic cracking equilibrium catalyst and/or a deep catalytic cracking equilibrium catalyst after treatment, the treatment may include demetallization treatment and/or particle diameter adjustment treatment, preferably, said Component A catalyst has a deep cracking activity of 55-65, preferably 57-64;
Component B catalyst is a fresh catalyst, the active component of which comprises a hollow hierarchical-porous ZSM-5 nanocrystal material, based on dry basis, the content of said ZSM-5 nanocrystal material is 5-15 wt% relative to the total weight of Component B catalyst.

3. The composite start-up catalyst according to claim 1, particularly a start-up catalyst for a deep catalytic cracking unit, **characterized in that**, based on the dry basis weight of the composite start-up catalyst, the composite start-up catalyst comprises:
(1) 20-90 wt%, preferably 75-85 wt% of Component A catalyst,
(2) 5-65 wt%, preferably 10-20 wt% of Component B catalyst,
(3) 5-15 wt%, preferably 5-10 wt% of Component C catalyst,
wherein, Component A catalyst is a deep catalytic cracking equilibrium catalyst and/or a deep catalytic cracking equilibrium catalyst after treatment, the treatment may include demetallization treatment and/or particle diameter adjustment treatment, preferably, said Component A catalyst has a deep cracking activity of 55-65, preferably 57-64;
Component B catalyst is a fresh catalyst, the active component of which comprises a ZSM-5 zeolite, based on dry basis, the content of said ZSM-5 zeolite is 5-15 wt% relative to the total weight of Component B catalyst;
Component C catalyst contains 2-10 wt% of an oxide of a modifying metal, said modifying metal being an alkaline earth metal.

4. The composite start-up catalyst according to claim 1, particularly a start-up catalyst for a catalytic cracking unit, **characterized in that**, based on the dry basis weight of the composite start-up catalyst, the composite start-up catalyst comprises:
(1) 15-95%, preferably 75-95% of Component A catalyst,
(2) 5-85%, preferably 5-25% of Component B catalyst,
wherein, said Component A catalyst is a catalytic cracking equilibrium catalyst and/or a catalytic cracking equilibrium catalyst after treatment; preferably, said Component A catalyst has a cracking activity of 55-65, preferably 57-64;
said Component B catalyst is a fresh catalyst, the active component of which comprises a modified small crystal grain Y-type zeolite material, based on dry basis, the content of said modified small crystal grain Y-type zeolite material is 5-15 wt% of Component B catalyst.

5. The composite start-up catalyst according to claim 1, particularly a start-up catalyst for a catalytic cracking unit, **characterized in that**, based on the dry basis weight of the composite start-up catalyst, the composite start-up catalyst comprises:
(1) 20-90%, preferably 75-90% of Component A catalyst,
(2) 5-65%, preferably 5-15% of Component B catalyst,
(3) 5-15%, preferably 5-10% of Component C catalyst,
wherein, Component A catalyst is a catalytic cracking equilibrium catalyst and/or a catalytic cracking equilibrium catalyst after treatment, preferably, said Component A catalyst has a deep cracking activity of 55-65, preferably 57-64; said Component B catalyst is a fresh catalyst, the main active component of which comprises a modified small crystal grain Y-type zeolite and optionally a ZSM-5 zeolite material, Component C catalyst comprises a support and a metal oxide, Component C catalyst contains 2-10 wt% of a metal oxide, said modifying metal being an alkaline earth metal.

6. The composite start-up catalyst according to any one of claims 1-3, **characterized in that**, said Component A catalyst has a specific surface area ≥100 m²/g, preferably 100-200 m²/g; and/or, said Component A catalyst has the following particle diameter distribution: content of particles with a particle diameter of 0-20 µm ≤ 3.0 vol%, preferably ≤ 2.0 vol%, content of particles with a particle diameter of 0-40 µm ≤ 18.0 vol%, content of particles with a particle diameter of 0-149 µm ≥ 90.0 vol%, and its average particle diameter is 60.0-80.0 µm, preferably 65.0-80.0 µm; and/or, said Component B catalyst has the following particle diameter distribution: content of particles with a particle diameter of 0-20 µm ≤ 2.0 vol%, content of particles with a particle diameter of 0-40 µm ≤ 18.0 vol%, content of particles with a particle diameter of 0-149 µm ≥ 90.0 vol%, and its average particle diameter is 60.0-85.0 µm; and/or, the composite start-up catalyst has a content of particles with a particle diameter of 0-20 µm ≤ 2.0 vol%, a content of particles with a particle diameter of 0-40 µm ≤ 18.0 vol%, a content of particles with a particle diameter of 0-149 µm ≥ 90.0 vol%, and an average particle diameter calculated by volume of 65.0-85.0 µm.

7. The composite start-up catalyst according to any one of claims 1-3, **characterized in that**, said Component A catalyst has a nickel content ≤6000 µg/g, preferably 500-6000 µg/g; a vanadium content ≤5000 µg/g, preferably ≤3000 µg/g, preferably 50-3000 µg/g; a rare earth element content ≤10000 µg/g, preferably 500-10000 µg/g; an iron content ≤4500 µg/g; and/or, in the composite start-up catalyst, the nickel content is ≤4000 µg/g, preferably 200-4000 µg/g; the vanadium content is ≤2500 µg/g, preferably 300-2500 µg/g; and/or, said Component B catalyst has an apparent bulk density of 0.8-0.94 g/mL and an abrasion index ≤ 2.

8. The composite start-up catalyst according to claim 4, **characterized in that**, said Component A catalyst has a specific surface area ≥100 m²/g; and/or, said Component A catalyst has the following particle diameter distribution: content of particles with a particle diameter of 0-20 µm ≤ 3.0 vol%, content of particles with a particle diameter of 0-40 µm ≤ 18.0 vol%, content of particles with a particle diameter of 0-149 µm ≥ 90.0 vol%, and its average particle diameter is 60.0-80.0 µm; and/or, said Component A catalyst has a nickel content ≤6000 µg/g, a vanadium content ≤4000 µg/g, an iron content ≤5000 µg/g, and a rare earth element content ≥10000 µg/g; and/or, said Component B catalyst has the following particle diameter distribution: content of particles with a particle diameter of 0-20 µm ≤ 2.0 vol%, content of particles with a particle diameter of 0-40 µm ≤ 18.0 vol%, content of particles with a particle diameter of 0-149 µm ≥ 90.0 vol%, and its average particle diameter is 60.0-85.0 µm; and/or, said Component B catalyst has an apparent bulk density of 0.80-0.94 g/mL and an abrasion index ≤ 2.0; and/or, said Component B catalyst further comprises a support, based on dry basis, the support content is 85-95 wt% of Component B catalyst, preferably, the support is selected from one or more of natural clay, alumina support, and silica support; preferably, said alumina support is one or more of alumina sol, acidified pseudo-boehmite, hydrated alumina, and activated alumina, and said silica support may be one or more of neutral silica sol, acidic silica sol, or alkaline silica sol.

9. The composite start-up catalyst according to claim 4, **characterized in that**, said modified small crystal grain Y-type zeolite material has the following properties: RE₂O₃ content is 0-18 wt%, Na₂O content is not more than 1 wt%, cell constant is 2.43-2.47 nm, proportion of non-framework aluminum content to total aluminum content is not higher than 30%, ratio of B acid amount to L acid amount is not less than 2.5, external surface acid amount is 150-300 µmol/g, total specific surface area is 580-650 m²·g⁻¹, average crystal grain size is 0.5-1.0 µm; and/or, said modified small crystal grain Y-type zeolite material has a relative crystallinity of 45-65% and a lattice collapse temperature is not lower than 1030°C.

10. The composite start-up catalyst according to claim 4, **characterized in that**, the composite start-up catalyst has the following particle diameter distribution: content of particles with a particle diameter of 0-20 µm ≤ 2.0 vol%, content of particles with a particle diameter of 0-40 µm ≤ 18.0 vol%, content of particles with a particle diameter of 0-149 µm ≥ 90.0 vol%, and its average particle diameter is 65.0-85.0 µm, and/or, in the composite start-up catalyst, the nickel content ≤5000 µg/g, the vanadium content ≤3500 µg/g, the iron content ≤4500 µg/g, and/or, the composite start-up catalyst has a coke factor ≤ 0.140, a gasoline factor ≥ 0.420, and/or, the composite start-up catalyst has a cracking activity of 55-65; and/or, the composite start-up catalyst has an apparent bulk density of 0.90-0.94 g/mL and an abrasion index ≤ 2.0.

11. The composite start-up catalyst according to claim 5, **characterized in that**, said Component A catalyst is a catalytic cracking catalyst, said Component A catalyst has the following properties: specific surface area ≥100 m²/g; and/or, nickel content ≤6000 µg/g, vanadium content ≤5000 µg/g, iron content ≤5000 µg/g, sodium content ≤3000 µg/g, calcium content ≤3000 µg/g; and/or, said Component A catalyst has the following particle diameter distribution: content of particles with a particle diameter of 0-20 µm ≤ 3.0 vol%, content of particles with a particle diameter of 0-40 µm ≤ 18.0 vol%, content of particles with a particle diameter of 0-149 µm ≥ 90.0 vol%, and an average particle diameter of 60.0-80.0 µm; and/or, said Component A catalyst has a cracking activity of 55-65; and/or, the crystallinity of said Y-type zeolite is ≥20.0%, and the crystallinity of said ZSM-5 zeolite is ≥2.0%.

12. The composite start-up catalyst according to claim 5, **characterized in that**, said Component B catalyst has an apparent bulk density of 0.8-0.94 g/mL and an abrasion index ≤ 2.0; and/or, said Component B catalyst has the following particle diameter distribution: content of particles with a particle diameter of 0-20 µm ≤ 2.0 vol%, content of particles with a particle diameter of 0-40 µm ≤ 18.0 vol%, content of particles with a particle diameter of 0-149 µm ≥ 90.0 vol%, and its average particle diameter is 60.0-85.0 µm; and/or, said Component B catalyst further comprises a matrix support and an active component, said matrix support is selected from one or more of natural clay, alumina support, and silica support; and/or, based on the dry basis weight of Component B catalyst, the content of said matrix support on a dry basis is 85-95 wt% of Component B catalyst, and the content of the active component on a dry basis is 5-15 wt% of Component B catalyst; and/or, the active component of said Component B catalyst is a modified small crystal grain Y-type zeolite and optionally a ZSM-5 zeolite; preferably, the weight ratio of modified small crystal grain Y-type zeolite to ZSM-5 zeolite is greater than 2; preferably, the modified small crystal grain Y-type zeolite has an average crystal grain size of 300-700 nm; the rare earth content of the modified small crystal grain Y-type zeolite may be 1-20 wt%; and/or, the silica-alumina ratio in terms of SiO₂/Al₂O₃ molar ratio is 5.1-10.

13. The composite start-up catalyst according to claim 5, **characterized in that**, the metal oxide loading of said Component C catalyst is 2-10 wt%, and/or, the metal oxide of said Component C catalyst may be one or more of magnesium oxide, barium oxide, strontium oxide, and radium oxide.

14. The composite start-up catalyst according to claim 5, **characterized in that**, the composite start-up catalyst has an apparent bulk density of 0.90-0.94 g/mL and an abrasion index ≤ 2.0; and/or, the composite start-up catalyst comprises: nickel content ≤5000 µg/g, vanadium content ≤4000 µg/g, iron content ≤4000 µg/g, sodium content ≤2000 µg/g, calcium content ≤2000 µg/g; and/or, the composite start-up catalyst has the following particle diameter distribution: content of particles with a particle diameter of 0-20 µm ≤ 2.0 vol%, content of particles with a particle diameter of 0-40 µm ≤ 18.0 vol%, content of particles with a particle diameter of 0-149 µm ≥ 90.0 vol%, and its average particle diameter is 65.0-85.0 µm; and/or, the composite start-up catalyst has a cracking activity of 55-65, a coke factor ≤ 0.125, for example 0.05-0.12, a gasoline factor ≥ 0.430, for example 0.43-0.48, and a propylene factor ≥ 0.420, for example 0.42-0.47.

15. The composite start-up catalyst according to any one of claims 2-3, **characterized in that**, said ZSM-5 zeolite is selected from a hollow hierarchical-porous ZSM-5 nanocrystal material, said hollow hierarchical-porous ZSM-5 nanocrystal material has an average crystal grain size of 0.2-3.0 µm, the ratio of bulk silica-alumina molar ratio to surface silica-alumina molar ratio of said hollow hierarchical-porous ZSM-5 nanocrystal material is 1.0-1.5, the total specific surface area of said hollow hierarchical-porous ZSM-5 nanocrystal material is 340-420 m²/g, the mesopore specific surface area is 40-150 m²/g, the N₂ adsorption-desorption curve of said hollow hierarchical-porous ZSM-5 nanocrystal material exhibits an H4-type hysteresis loop, and/or, said hollow hierarchical-porous ZSM-5 nanocrystal material has a relative crystallinity of 75-95%; and/or, said Component B catalyst further comprises a support, based on dry basis, the support content is 85-95 wt% of Component B catalyst, the support being selected from one or more of natural clay, alumina support, and silica support; preferably, said alumina support is one or more of alumina sol, acidified pseudo-boehmite, hydrated alumina, and activated alumina; said silica support is one or more of neutral silica sol, acidic silica sol, or alkaline silica sol.

16. The composite start-up catalyst according to claim 3, **characterized in that**, said Component C catalyst contains 2-10 wt% of a modifying metal oxide and 90-98 wt% of a support, wherein the modifying metal oxide is an alkaline earth metal oxide; the support is selected from one or more of natural clay, alumina support, and silica support; preferably, said alumina support is one or more of alumina sol, acidified pseudo-boehmite, hydrated alumina, and activated alumina; said silica support is one or more of neutral silica sol, acidic silica sol, or alkaline silica sol; and/or, said Component C catalyst is obtained by modifying inert particles with said modifying metal element compound, or by adding a modifying metal element compound to an inert particle precursor, pulping, and then spray drying; said modifying metal element compound is one or more of magnesium nitrate, barium nitrate, strontium nitrate, or radium nitrate.

17. The composite start-up catalyst according to any one of claims 1-3, **characterized in that**, the composite start-up catalyst has an apparent bulk density of 0.90-0.94 g/mL, and an abrasion index ≤ 2.0; and/or, the composite start-up catalyst has a coke factor ≤ 0.070, for example 0.040-0.065; a propylene factor ≥ 0.44, for example 0.44-0.5; and/or, a deep cracking activity of 58-62.

18. A method for preparing the composite start-up catalyst according to any one of claims 1-3, **characterized in that**, the method comprises: preparing said Component B catalyst and optional Component C catalyst, and physically mixing Component A catalyst, Component B catalyst, and optional Component C catalyst; preferably, the method for preparing said Component B catalyst comprises: mixing a matrix support, water with a ZSM-5 zeolite or a hollow hierarchical-porous ZSM-5 nanocrystal material, pulping, spray drying, and optionally calcining to obtain catalyst particles; mixing the obtained catalyst particles, an ammonium salt, and water to perform ammonium exchange, and optionally washing, so that the Na₂O content in the obtained Component B catalyst particles is less than 0.15 wt%; preferably, mixing the catalyst particles, an ammonium salt, and water in a weight ratio of 1:(0.1-1):(5-15) to perform ammonium exchange; and/or, the conditions for the ammonium exchange include: a temperature of 50-100°C and a time of 0.5-2 hours, preferably, the ammonium salt is selected from one or more of ammonium chloride, ammonium sulfate, and ammonium nitrate; and/or, the method for preparing said Component C catalyst comprises: mixing a matrix support with optional water, pulping, spray drying to obtain catalyst particles, performing modification with a modifying metal by impregnation, drying, and optionally calcining; or, mixing a matrix support, a modifying metal salt solution, and optional water, pulping, spray drying, and optionally calcining to obtain third catalyst particles; mixing the obtained catalyst particles, an ammonium salt, and water to perform ammonium exchange, and optionally washing, so that the Na₂O content in the obtained Component C catalyst particles is less than 0.15 wt%; preferably, mixing the catalyst particles, an ammonium salt, and water in a weight ratio of 1:(0.1-1):(5-15) to perform ammonium exchange, wherein the conditions for the ammonium exchange include: a temperature of 50-100°C and a time of 0.5-2 hours, preferably, the ammonium salt is selected from one or more of ammonium chloride, ammonium sulfate, and ammonium nitrate.

19. The method according to claim 18, **characterized in that**, said Component A catalyst is a deep catalytic cracking equilibrium catalyst with a deep cracking activity of 55-65, wherein the deep catalytic cracking equilibrium catalyst is an equilibrium catalyst produced by a deep catalytic cracking unit; or, said Component A catalyst is a treated equilibrium catalyst obtained by treatment, wherein said demetallization treatment is chemical demetallization treatment and/or physical demetallization treatment, and said particle diameter adjustment treatment is purging with gas to remove fine powder contained herein, or sieving.

20. A method for preparing the composite start-up catalyst according to any one of claim 1 and claims 4-5, **characterized in that**, the method comprises: preparing said Component B catalyst and optional Component C catalyst, and physically mixing Component A catalyst, Component B catalyst, and optional Component C catalyst uniformly; wherein, the preparation method of Component B catalyst comprises: mixing a support and/or support precursor/modified small crystal grain Y-type zeolite material and water, pulping to form a slurry, spray drying, and optionally calcining to obtain catalyst microspheres; subjecting the obtained catalyst microspheres to ammonium exchange, wherein the ammonium exchange results in a Na₂O content in the obtained Component B catalyst of less than 0.15 wt%; preferably, mixing the catalyst microspheres, an ammonium salt, and water in a weight ratio of 1:(0.1-1):(5-15) to conduct the ammonium exchange, and the conditions for said ammonium exchange include: a temperature of 50-100°C and a time of 0.5-2 hours, and the ammonium salt is selected from one or more of ammonium chloride, ammonium sulfate, and ammonium nitrate; and/or, the preparation method of Component C catalyst comprises: modifying inert microspheres with a metal element, or adding a metal element to a catalyst precursor, followed by spray drying.

21. Use of the composite start-up catalyst according to any one of claims 1-17 in the start-up of a new deep catalytic cracking or catalytic cracking unit or the start-up of a revamped deep catalytic cracking or catalytic cracking unit, preferably, the unit is an MIP catalytic cracking unit or an RTC deep catalytic cracking unit.

22. A start-up method for a deep catalytic cracking unit of heavy oil or high-density heavy oil, **characterized in that**, during the start-up phase of the deep catalytic cracking unit, heavy oil is introduced into a deep catalytic cracking reactor to contact a fluidized composite start-up catalyst according to claim 2 to carry out a deep catalytic cracking reaction, or, high-density heavy oil is introduced into a deep catalytic cracking reactor to contact a fluidized composite start-up catalyst according to claim 3 to carry out a deep catalytic cracking reaction.

23. A start-up method for a catalytic cracking unit for heavy oil, **characterized in that**, during the start-up phase of the catalytic cracking unit, heavy oil is introduced into a catalytic cracking reactor to contact a fluidized composite start-up catalyst according to claim 4 or 5 to carry out a catalytic cracking reaction.
